(19) Europäisches Patentamt
European Patent Office
Office européen des brevets

(11) EP 2 079 788 B1

(12) **EUROPEAN PATENT SPECIFICATION**

(45) Date of publication and mention of the grant of the patent:
**24.11.2010 Bulletin 2010/47**

(21) Application number: **07813977.1**

(22) Date of filing: **10.08.2007**

(51) Int Cl.:
***C08K 3/00*** *(2006.01)* ***C08K 5/00*** *(2006.01)*
***C08L 69/00*** *(2006.01)*

(86) International application number:
**PCT/US2007/075667**

(87) International publication number:
**WO 2008/054912 (08.05.2008 Gazette 2008/19)**

(54) **INFRARED TRANSMISSIVE THERMOPLASTIC COMPOSITION**

INFRAROTDURCHLÄSSIGE THERMOPLASTISCHE ZUSAMMENSETZUNG

COMPOSITION THERMOPLASTIQUE POUR LA TRANSMISSION DE LA LUMIÈRE INFRAROUGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.10.2006 US 554750**

(43) Date of publication of application:
**22.07.2009 Bulletin 2009/30**

(73) Proprietor: **SABIC Innovative Plastics IP B.V.**
**4612PX Bergen op Zoom (NL)**

(72) Inventors:
- **HURST, Jeremy, D.**
  **NL-3701AD Rotterdam (NL)**
- **PUYENBROEK, Robert**
  **NL-4617 JB Bergen Op Zoom (NL)**
- **QU, Zhaohui**
  **Pudong, Shanghai 200122 (CN)**
- **YAO, Wayne**
  **Suite 26-502, Shanghai 200208 (CN)**

(74) Representative: **Modiano, Micaela Nadia**
**Modiano Josif Pisanty & Staub Ltd**
**Thierschstrasse 11**
**80538 München (DE)**

(56) References cited:
**JP-A- 9 003 311**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 079 788 B1

## Description

### BACKGROUND

This disclosure relates to infrared transmissive thermoplastic compositions, articles formed therefrom, and uses thereof.

Laser welding is becoming widely used in engineering thermoplastics as a method of secondary processing. When the concentrated energy of the laser is used for welding, it has many advantages over other conventional methods. Lasers are non-contact, have a small heat affected zone, and only require access from one side of a part.

Impact modified polycarbonates have been widely used for electronics such as charger housings due to their excellent impact strength, heat resistance and chemical resistance. For laser welding, the thermoplastic composition must be able to be both laser opaque in some instances and laser transparent in other instances. For example, laser welding may require a top part to be welded to a bottom part, therefore the top part must be laser transparent to allow the laser energy to pass through to the bottom part, and the bottom part must be laser absorbing or able to absorb the laser energy rather than allowing it to pass through the part. The general approach has been to use different color packages to control laser transparence, but when applying a laser to some impact modified polycarbonate compositions with transparent color packages, there is a pearlescent appearance that is not aesthetically pleasing. An impact modified polycarbonate composition having laser transparency as well as good appearance while maintaining impact strength, heat resistance and other physical properties is desirable. Particularly desirable are laser transparent impact modified polycarbonate compositions in dark colors such as black, blue and red.

The increased variety of small, portable electronic devices has led to a commensurately increased need to adapt the aesthetic form of such devices to the desired functions they provide. For devices such as calculators, television remote controls, multi-functional cellular telephones, personal digital assistants (PDA's), laptop computers, wireless mouses, computer keyboards, and other similar items, signal and/or data information transfer between the device and a complementary device (such as between an optical mouse and computer) is generally accomplished by using either a radio frequency broadcast signal between the devices, or more commonly line-of-sight infrared signals transmitted between the devices. The latter is useful for short range inter-device communication.

Devices which communicate via transmitted infrared signals require both a transmission source and/or a receiver in each device. Since typical materials of construction of the cases for such devices have a variety of fillers and additives, and they are formed from a variety of different thermoplastics, the transmissivity of the cases is not typically high enough to permit the placement of the infrared source and receiver within the case. Optical windows that are transparent in the infrared are frequently used to provide an optical pathway into and out of the casing in such devices. Typically, the optical windows are formed from an infrared-transparent thermoplastic material with low light scattering properties, and the material may be clear or opaque in the visible spectrum. It is desirable for these windows to absorb visible light (that is, to be opaque to the human eye), and to filter out the effects of stray light.

JP 09 003311 A (TEIJIN CHEMICALS LTD) 7 January 1997 (1997-01-07) relates to dyed compositions based on polycarbonate which are transmittant to infrared light.

There accordingly remains a need in the art for thermoplastic compositions for use in infrared transmissive windows or other infrared transmissive applications, which have improved appearance and good mechanical properties such as impact and heat resistance while maintaining the desired light transmissive properties for infrared and visible light.

### SUMMARY

The above deficiencies in the art are alleviated by, in an embodiment, a thermoplastic composition comprising from 0.5 wt.% to 96.99 wt.% of an aromatic polycarbonate; from 3 wt.% to 99.49 wt.% of a polycarbonate-polysiloxane copolymer; and from 0.01 wt.% to 5.0 wt.% of a dye combination comprising a dark color dye; wherein the siloxane domains in the composition have an average domain size of between 15 and 45 nanometers, wherein a molded article having a thickness of 1.0 millimeters consisting of the thermoplastic composition has a percent transmission of infrared light of greater than or equal to 65%, when measured at a wavelength of 800 nm, and a dE flop of less than 6.

In another embodiment, a thermoplastic composition comprises from 50 wt.% to 96.99 wt.% of an aromatic polycarbonate; from 3 wt.% to 45 wt.% of a polycarbonate-polysiloxane copolymer; and from 0.01 wt.% to 5.0 wt.% of a dye combination comprising a dark color dye; wherein the siloxane domains in the composition have an average domain size of between 15 and 45 nanometers and the total siloxane content, based on the total composition, is at least 1.5 wt.%, wherein a molded article having a thickness of 1.0 millimeters comprising the thermoplastic composition has a percent transmission of infrared light of greater than or equal to 65%, when measured at a wavelength of 800 nm, and a dE flop of less than 6.

In another embodiment, a thermoplastic composition comprises from 0.5 wt.% to 96.99 wt.% of an aromatic polycarbonate; from 3 wt.% to 99.49 wt.% of two polycarbonate-polysiloxane copolymers, wherein at least one polycarbonate-polysiloxane copolymer is transparent; and from 0.01 wt.% to 5.0 wt.% of a dye combination comprising a dark color dye; wherein the siloxane domains in the composition have an average domain size of between 15 and 45 nanometers and the total siloxane content, based on the total composition, is at least 1.5 wt.%, wherein a molded article having a thickness of 1.0 millimeters comprising the thermoplastic composition has a percent transmission of infrared light of greater than or equal to 65%, when measured at a wavelength of 800 nm, and a dE flop of less than 6.

In another embodiment, an article comprises the thermoplastic composition.

A description of the figures, which are meant to be exemplary and not limiting, is provided below.

BRIEF DESCRIPTION OF THE FIGURES

Figure 1 is a plot of the percent transmission vs. wavelength for different color packages molded into one millimeter chips.

Figure 2 is a Transmission Electron Microscopy (TEM) photograph showing the domain sizes in Example 1.

Figure 3 is a TEM photograph showing the domain sizes in Example 3.

Figure 4 is a TEM photograph showing the domain sizes in Example 10.

Figure 5 is a TEM photograph showing the domain sizes in Example 11.

The above described and other features are exemplified by the following detailed description.

DETAILED DESCRIPTION

Surprisingly, it has been found that a thermoplastic composition comprising an aromatic polycarbonate, a polycarbonate-polysiloxane copolymer, and an infrared transmissive dye combination having a dark color, wherein the siloxane domains in the composition have an average domain size of between 15 and 45 nanometers, has high infrared transmissivity, low visible light transmissivity, and has an aesthetically desirable colored appearance and surface finish. A molded article having a thickness of 1.0 millimeters (mm) and consisting of the infrared transmissive thermoplastic composition has a high infrared light transmission (%T) of greater than 65% at a wavelength of 800 nanometers (nm) and a dE flop of less than 6. Articles prepared from the thermoplastic composition further have low reflectivity and excellent aesthetic appearance. In some embodiments, a combination of two polycarbonate-polysiloxane copolymers are used.

In an embodiment, a thermoplastic composition comprises from 0.5 wt.% to 96.99 wt.% of an aromatic polycarbonate; from 3 wt.% to 99.49 wt.% of a polycarbonate-polysiloxane copolymer; and from 0.01 wt.% to 5.0 wt.% of a dye combination comprising a dark color dye; wherein the siloxane domains in the composition have an average domain size of between 15 and 45 nanometers, wherein a molded article having a thickness of 1.0 millimeters consisting of the thermoplastic composition has a percent transmission of infrared light of greater than or equal to 65%, when measured at a wavelength of 800 nm, and a dE flop of less than 6. In some embodiments, the dE flop is less than 4.

In some embodiments, the thermoplastic composition further comprises a second polycarbonate-polysiloxane copolymer. In some embodiments, the thermoplastic composition further comprises a flame retardant.

In another embodiment, a thermoplastic composition comprises from 50 wt.% to 96.99 wt.% of an aromatic polycarbonate; from 3 wt.% to 45 wt.% of a polycarbonate-polysiloxane copolymer; and from 0.01 wt.% to 5.0 wt.% of a dye combination comprising a dark color dye; wherein the siloxane domains in the composition have an average domain size of between 15 and 45 nanometers and the total siloxane content, based on the total composition, is at least 1.5 wt.%, wherein a molded article having a thickness of 1.0 millimeters comprising the thermoplastic composition has a percent transmission of infrared light of greater than or equal to 65%, when measured at a wavelength of 800 nm, and a dE flop of less than 6.

In another embodiment, a thermoplastic composition comprises from 0.5 wt.% to 96.99 wt.% of an aromatic polycarbonate; from 3 wt.% to 99.49 wt.% of two polycarbonate-polysiloxane copolymers, wherein at least one polycarbonate-polysiloxane copolymer is transparent; and from 0.01 wt.% to 5.0 wt.% of a dye combination comprising a dark color dye; wherein the siloxane domains in the composition have an average domain size of between 15 and 45 nanometers and the total siloxane content, based on the total composition, is at least 1.5 wt.%, wherein a molded article having a thickness of 1.0 millimeters comprising the thermoplastic composition has a percent transmission of infrared light of greater than or equal to 65%, when measured at a wavelength of 800 nm, and a dE flop of less than 6.

As used herein, the term "polycarbonate" refers to a polymer comprising the same or different carbonate units, or a copolymer that comprises the same or different carbonate units, as well as one or more units other than carbonate (i.e. copolycarbonate); the term "aliphatic" refers to a hydrocarbon radical having a valence of at least one comprising a linear or branched array of carbon atoms which is not cyclic; "aromatic" refers to a radical having a valence of at least one comprising at least one aromatic group; "cycloaliphatic" refers to a radical having a valence of at least one comprising an array of carbon atoms which is cyclic but not aromatic; "alkyl" refers to a straight or branched chain monovalent hydrocarbon radical; "alkylene" refers to a straight or branched chain divalent hydrocarbon radical; "alkylidene" refers

to a straight or branched chain divalent hydrocarbon radical, with both valences on a single common carbon atom; "alkenyl" refers to a straight or branched chain monovalent hydrocarbon radical having at least two carbons joined by a carbon-carbon double bond; "cycloalkyl" refers to a non-aromatic alicyclic monovalent hydrocarbon radical having at least three carbon atoms, with at least one degree of unsaturation; "cycloalkylene" refers to a non-aromatic alicyclic divalent hydrocarbon radical having at least three carbon atoms, with at least one degree of unsaturation; "aryl" refers to a monovalent aromatic benzene ring radical, or to an optionally substituted benzene ring system radical system fused to at least one optionally substituted benzene rings; "aromatic radical" refers to a radical having a valence of at least one comprising at least one aromatic group; examples of aromatic radicals include phenyl, pyridyl, furanyl, thienyl, naphthyl, and the like; "arylene" refers to a benzene ring diradical or to a benzene ring system diradical fused to at least one optionally substituted benzene ring; "alkylaryl" refers to an alkyl group as defined above substituted onto an aryl as defined above; "arylalkyl" refers to an aryl group as defined above substituted onto an alkyl as defined above; "alkoxy" refers to an alkyl group as defined above connected through an oxygen radical to an adjoining group; "aryloxy" refers to an aryl group as defined above connected through an oxygen radical to an adjoining group; the modifier "about" used in connection with a quantity is inclusive of the stated value and has the meaning dictated by the context (e.g., includes the degree of error associated with measurement of the particular quantity); "optional" or "optionally" means that the subsequently described event or circumstance may or may not occur, or that the subsequently identified material may or may not be present, and that the description includes instances where the event or circumstance occurs or where the material is present, and instances where the event or circumstance does not occur or the material is not present; and "direct bond", where part of a structural variable specification, refers to the direct joining of the substituents preceding and succeeding the variable taken as a "direct bond".

Compounds are described herein using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through the carbon of the carbonyl (C=O) group. The singular forms "a," "an," and "the" include plural referents unless the context clearly dictates otherwise. The endpoints of all ranges reciting the same characteristic or component are independently combinable and inclusive of the recited endpoint. All references are incorporated herein by reference. The terms "first," "second," and the like herein do not denote any order, quantity, or importance, but rather are used to distinguish one element from another. The modifier "about" used in connection with a quantity is inclusive of the stated value and has the meaning dictated by the context (e.g., includes the degree of error associated with measurement of the particular quantity).

Unless otherwise indicated, each of the foregoing groups may be unsubstituted or substituted, provided that the substitution does not significantly adversely affect synthesis, stability, or use of the compound. The term "substituted" as used herein means that any one or more hydrogens on the designated atom or group is replaced with another group, provided that the designated atom's normal valence is not exceeded. When the substituent is oxo (i.e., =O), then two hydrogens on the atom are replaced. Combinations of substituents and/or variables are permissible provided that the substitutions do not significantly adversely affect synthesis or use of the compound.

The thermoplastic composition includes a polycarbonate. As used herein, the terms "polycarbonate" and "polycarbonate resin" mean compositions having repeating structural carbonate units of the formula (1):

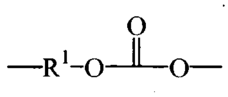

(1)

in which at least 60 percent of the total number of $R^1$ groups are aromatic organic radicals and the balance thereof are aliphatic, alicyclic, or aromatic radicals. In one embodiment, each $R^1$ is an aromatic organic radical, for example a radical of the formula (2):

$$-A^1-Y^1-A^2- \qquad (2)$$

wherein each of $A^1$ and $A^2$ is a monocyclic divalent aryl radical and $Y^1$ is a bridging radical having one or two atoms that separate $A^1$ from $A^2$. In an exemplary embodiment, one atom separates $A^1$ from $A^2$. Illustrative non-limiting examples of radicals of this type are -O-, -S-, -S(O)-, $-S(O)_2-$, -C(O)-, methylene, cyclohexylmethylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ may be a hydrocarbon group or a saturated hydrocarbon group such as methylene, cyclohexylidene, or isopropylidene.

Polycarbonates may be produced by the interfacial reaction of dihydroxy compounds having the formula HO-$R^1$-OH, which includes dihydroxy compounds of formula (3)

$HO-A^1-Y^1-A^2-OH$ (3)

wherein $Y^1$, $A^1$ and $A^2$ are as described above. Also included are bisphenol compounds of general formula (4):

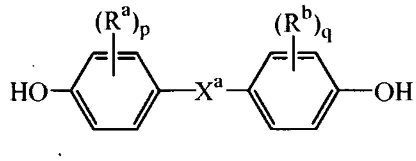

(4)

wherein $R^a$ and $R^b$ each represent a halogen atom or a monovalent hydrocarbon group and may be the same or different; p and q are each independently integers of 0 to 4; and $X^a$ represents one of the groups of formula (5):

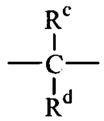

or

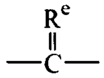

(5)

wherein $R^c$ and $R^d$ each independently represent a hydrogen atom or a monovalent linear or cyclic hydrocarbon group and $R^e$ is a divalent hydrocarbon group.

In an embodiment, a heteroatom-containing cyclic alkylene group comprises at least one heteroatom with a valency of 2 or greater, and at least two carbon atoms. Suitable heteroatoms for use in the heteroatom-containing cyclic alkylene group include -O-, -S-, and -N(Z)-, where Z is a substituent group selected from hydrogen, hydroxy, $C_{1-12}$ alkyl, $C_{1-12}$ alkoxy, or $C_{1-12}$ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

Other bisphenols containing substituted or unsubstituted cyclohexane units can be used, for example bisphenols of formula (6):

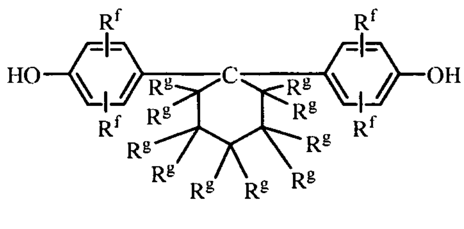

(6)

wherein each $R^f$ is independently hydrogen, $C_{1-12}$ alkyl, or halogen; and each $R^g$ is independently hydrogen or $C_{1-12}$ alkyl. The substituents may be aliphatic or aromatic, straight-chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures. Cyclohexyl bisphenol containing polycarbonates, or a combination comprising at least one of the foregoing with other bisphenol polycarbonates, are supplied by Bayer Co. under the APEC® trade name.

Other useful dihydroxy compounds having the formula $HO-R^1-OH$ include aromatic dihydroxy compounds of formula (7):

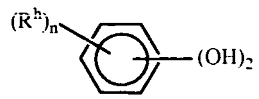

(7)

wherein each $R^h$ is independently a halogen atom, a $C_{1-10}$ hydrocarbyl such as a $C_{1-10}$ alkyl group, a halogen substituted $C_{1-10}$ hydrocarbyl such as a halogen-substituted $C_{1-10}$ alkyl group, and n is 0 to 4. The halogen is usually bromine.

Exemplary dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, (alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis (4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl) ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations comprising at least one of the foregoing dihydroxy compounds.

Specific examples of bisphenol compounds that may be represented by formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis (4-hydroxyphenyl) n-butane, 2,2-bis(4-hydroxy-1-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds may also be used.

In a specific embodiment, the polycarbonate is a linear homopolymer derived from bisphenol A, in which each of $A^1$ and $A^2$ is p-phenylene and $Y^1$ is isopropylidene. The polycarbonates may have an intrinsic viscosity, as determined in chloroform at 25°C, of 0.3 to 1.5 deciliters per gram (dl/g), specifically 0.45 to 1.0 dl/g. The polycarbonates may have a weight average molecular weight (Mw) of 10,000 to 100,000, as measured by gel permeation chromatography (GPC) using a crosslinked styrene-divinyl benzene column, at a sample concentration of 1 milligram per milliliter, and as calibrated with polycarbonate standards.

In an embodiment, the polycarbonate has a melt volume flow rate (often abbreviated MVR) measures the rate of extrusion of a thermoplastics through an orifice at a prescribed temperature and load. Polycarbonates suitable for the formation of thin articles may have an MVR, measured at 300°C under a load of 1.2 kg according to ASTM D1238-04, of 0.5 to 80 cubic centimeters per 10 minutes (cc/10 min). In a specific embodiment, a suitable polycarbonate composition has an MVR measured at 300°C under a load of 1.2 kg according to ASTM D1238-04, of 0.5 to 50 cc/10 min, specifically 0.5 to 25 cc/10 min, and more specifically 1 to 15 cc/10 min. Mixtures of polycarbonates of different flow properties may be used to achieve the overall desired flow property.

The polycarbonate may have a light transmittance greater than or equal to 55%, specifically greater than or equal to 60% and more specifically greater than or equal to 70%, as measured using a molded article of $3.2 \pm 0.12$ millimeters thickness and consisting of the polycarbonate, according to ASTM D1003-00. The polycarbonate may also have a haze less than or equal to 5%, specifically less than or equal to 4%, and most specifically less than or equal to 3%, as measured using a molded article of $3.2 \pm 0.12$ millimeters thickness and consisting of the polycarbonate, according

to ASTM D1003-00.

"Polycarbonates" and "polycarbonate resins" as used herein further include homopolycarbonates, copolymers comprising different $R^1$ moieties in the carbonate (referred to herein as "copolycarbonates"), copolymers comprising carbonate units and other types of polymer units, such as ester units, and combinations comprising at least one of homopolycarbonates and copolycarbonates. As used herein, "combination" is inclusive of blends, mixtures, alloys, reaction products, and the like. A specific type of copolymer is a polyester carbonate, also known as a polyester-polycarbonate. Such copolymers further contain, in addition to recurring carbonate chain units of the formula (1), repeating units of formula (8):

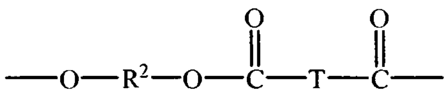

(8)

wherein $R^2$ is a divalent group derived from a dihydroxy compound, and may be, for example, a $C_{2-10}$ alkylene group, a $C_{6-20}$ alicyclic group, a $C_{6-20}$ aromatic group or a polyoxyalkylene group in which the alkylene groups contain 2 to about 6 carbon atoms, specifically 2, 3, or 4 carbon atoms; and T divalent group derived from a dicarboxylic acid, and may be, fur example, a $C_{2-10}$ alkylene group, a $C_{6-20}$ alicyclic group, a $C_{6-20}$ alkyl aromatic group, or a $C_{6-20}$ aromatic group.

In an embodiment, $R^2$ is a $C_{2-30}$ alkylene group having a straight chain, branched chain, or cyclic (including polycyclic) structure. In another embodiment, $R^2$ is derived from an aromatic dihydroxy compound of formula (4) above. In another embodiment, $R^2$ is derived from an aromatic dihydroxy compound of formula (7) above.

Examples of aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids are terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is about 91:9 to about 2:98. In another specific embodiment, $R^2$ is a $C_{2-6}$ alkylene group and T is p-phenylene, m-phenylene, naphthalene, a divalent cycloaliphatic group, or a combination thereof. This class of polyester includes the poly(alkylene terephthalates).

The molar ratio of ester units to carbonate units in the copolymers may vary broadly, for example 1:99 to 99: 1, specifically 10:90 to 90: 10, more specifically 25:75 to 75:25, depending on the desired properties of the final composition.

In a specific embodiment, the polyester unit of a polyester-polycarbonate may be derived from the reaction of a combination of isophthalic and terephthalic diacids (or derivatives thereof) with resorcinol. In another specific embodiment, the polyester unit of a polyester-polycarbonate is derived from the reaction of a combination of isophthalic acid and terephthalic acid with bisphenol-A. In a specific embodiment, the polycarbonate units are derived from bisphenol A. In another specific embodiment, the polycarbonate units are derived from resorcinol and bisphenol A in a molar ratio of resorcinol carbonate units to bisphenol A carbonate units of 1:99 to 99:1.

Polycarbonates can be manufactured by processes such as interfacial polymerization and melt polymerization. Although the reaction conditions for interfacial polymerization may vary, an exemplary process generally involves dissolving or dispersing a dihydric phenol reactant in aqueous caustic soda or potash, adding the resulting mixture to a suitable water-immiscible solvent medium, and contacting the reactants with a carbonate precursor in the presence of a suitable catalyst such as triethylamine or a phase transfer catalyst, under controlled pH conditions, e.g., about 8 to about 10. The most commonly used water immiscible solvents include methylene chloride, 1,2-dichloroethane, chlorobenzene, toluene, and the like.

Carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors may also be used. In an exemplary embodiment, an interfacial polymerization reaction to form carbonate linkages uses phosgene as a carbonate precursor, and is referred to as a phosgenation reaction.

Among the phase transfer catalysts that may be used are catalysts of the formula $(R^3)_4Q^+X$, wherein each $R^3$ is the same or different, and is a $C_{1-10}$ alkyl group; Q is a nitrogen or phosphorus atom; and X is a halogen atom or a $C_{1-8}$ alkoxy group or $C_{6-18}$ aryloxy group. Suitable phase transfer catalysts include, for example, $[CH_3(CH_2)_3]_4NX$, $[CH_3(CH_2)_3]_4PX$, $[CH_3(CH_2)_5]_4NX$, $[CH_3(CH_2)_6]_4NX$, $[CH_3(CH_2)_4]_4NX$, $CH_3[CH_3(CH_2)_3]_3NX$, and $CH_3[CH_3(CH_2)_2]_3NX$, wherein X is $Cl^-$, $Br^-$, a $C_{1-8}$ alkoxy group or a $C_{6-18}$ aryloxy group. An effective amount of a phase transfer catalyst may

be about 0.1 to about 10 wt% based on the weight of bisphenol in the phosgenation mixture. In another embodiment an effective amount of phase transfer catalyst may be about 0.5 to about 2 wt% based on the weight of bisphenol in the phosgenation mixture.

All types of polycarbonate end groups are contemplated as being useful in the polycarbonate composition, provided that such end groups do not significantly adversely affect desired properties of the compositions.

Branched polycarbonate blocks may be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of about 0.05 to about 2.0 wt%. Mixtures comprising linear polycarbonates and branched polycarbonates may be used.

A chain-stopper (also referred to as a capping agent) may be included during polymerization. The chain-stopper limits molecular weight growth rate, and so controls molecular weight in the polycarbonate. Exemplary chain-stoppers include certain mono-phenolic compounds, mono-carboxylic acid chlorides, and/or mono-chloroformates. Suitable mono-phenolic chain-stoppers are exemplified by monocyclic phenols such as phenol and $C_1$-$C_{22}$ alkyl-substituted phenols such as p-cumyl-phenol, resorcinol monobenzoate, and p-and tertiary-butyl phenol; and monoethers of diphenols, such as p-methoxyphenol. Alkyl-substituted phenols with branched chain alkyl substituents having 8 to 9 carbon atom may be specifically mentioned. Certain mono-phenolic UV absorbers may also be used as a capping agent, for example 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

Mono-carboxylic acid chlorides may also be used as chain-stoppers. These include monocyclic, mono-carboxylic acid chlorides such as benzoyl chloride, $C_1$-$C_{22}$ alkyl-substituted benzoyl chloride, toluoyl chloride, halogen-substituted benzoyl chloride, bromobenzoyl chloride, cinnamoyl chloride, 4-nadimidobenzoyl chloride, and combinations thereof; polycyclic, mono-carboxylic acid chlorides such as trimellitic anhydride chloride, and naphthoyl chloride; and combinations of monocyclic and polycyclic mono-carboxylic acid chlorides. Chlorides of aliphatic monocarboxylic acids with less than or equal to about 22 carbon atoms are suitable. Functionalized chlorides of aliphatic monocarboxylic acids, such as acryloyl chloride and methacryoyl chloride, are also suitable. Also suitable are mono-chloroformates including monocyclic, mono-chloroformates, such as phenyl chloroformate, alkyl-substituted phenyl chloroformate, p-cumyl phenyl chloroformate, toluene chloroformate, and combinations thereof.

Alternatively, melt processes may be used to make the polycarbonates. Generally, in the melt polymerization process, polycarbonates may be prepared by co-reacting, in a molten state, the dihydroxy reactant(s) and a diaryl carbonate ester, such as diphenyl carbonate, in the presence of a transesterification catalyst in a Banbury® mixer, twin screw extruder, or the like to form a uniform dispersion. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing. In addition, suitable transesterification catalyst for use may include phase transfer catalysts of formula $(R^3)_4Q^+X$ above, wherein each $R^3$, Q, and X are as defined above. Examples of suitable transesterification catalysts include tetrabutylammonium hydroxide, methyltributylammonium hydroxide, tetrabutylammonium acetate, tetrabutylphosphonium hydroxide, tetrabutylphosphonium acetate, tetrabutylphosphonium phenolate, or a combination comprising at least one of the foregoing.

The polyester-polycarbonates may also be prepared by interfacial polymerization. Rather than utilizing the dicarboxylic acid per se, it is possible, and sometimes even preferred, to employ the reactive derivatives of the acid, such as the corresponding acid halides, in particular the acid dichlorides and the acid dibromides. Thus, for example instead of using isophthalic acid, terephthalic acid, or a combination comprising at least one of the foregoing, it is possible to employ isophthaloyl dichloride, terephthaloyl dichloride, and a combination comprising at least one of the foregoing.

In addition to the polycarbonates described above, combinations of the polycarbonate with other thermoplastic polymers, for example combinations of homopolycarbonates and/or polycarbonate copolymers with polyesters, may be used. Suitable polyesters may include, for example, polyesters having repeating units of formula (8), which include poly (alkylene dicarboxylates), liquid crystalline polyesters, and polyester copolymers. The polyesters described herein are generally completely miscible with the polycarbonates when blended.

The polyesters may be obtained by interfacial polymerization or melt-process condensation as described above, by solution phase condensation, or by transesterification polymerization wherein, for example, a dialkyl ester such as

dimethyl terephthalate may be transesterified with ethylene glycol using acid catalysis, to generate poly(ethylene terephthalate). It is possible to use a branched polyester in which a branching agent, for example, a glycol having three or more hydroxyl groups or a trifunctional or multifunctional carboxylic acid has been incorporated. Furthermore, it is sometime desirable to have various concentrations of acid and hydroxyl end groups on the polyester, depending on the ultimate end use of the composition.

Useful polyesters may include aromatic polyesters, poly(alkylene esters) including poly(alkylene arylates), and poly(cycloalkylene diesters). Aromatic polyesters may have a polyester structure according to formula (8), wherein D and T are each aromatic groups as described hereinabove. In an embodiment, useful aromatic polyesters may include, for example, poly(isophthalate-terephthalate-resorcinol) esters, poly(isophthalate-terephthalate-bisphenol-A) esters, poly[(isophthalate-terephthalate-resorcinol) ester-*co*-(isophthalate-terephthalate-bisphenol-A)] ester, or a combination comprising at least one of these. Also contemplated are aromatic polyesters with a minor amount, e.g., about 0.5 to about 10 wt%, based on the total weight of the polyester, of units derived from an aliphatic diacid and/or an aliphatic polyol to make copolyesters. Poly(alkylene arylates) may have a polyester structure according to formula (8), wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly(alkylene arylate) is a poly(alkylene terephthalate). In addition, for poly(alkylene arylate), specifically useful alkylene groups D include, for example, ethylene, 1,4-butylene, and bis-(alkylene-disubstituted cyclohexane) including cis- and/or trans-1,4-(cyclohexylene)dimethylene. Examples of poly(alkylene terephthalates) include poly(ethylene terephthalate) (PET), poly(1,4-butylene terephthalate) (PBT), and poly(propylene terephthalate) (PPT). Also useful are poly(alkylene naphthoates), such as poly(ethylene naphthanoate) (PEN), and poly(butylene naphthanoate) (PBN). A specifically suitable poly(cycloalkylene diester) is poly (cyclohexanedimethylene terephthalate) (PCT). Combinations comprising at least one of the foregoing polyesters may also be used.

Copolymers comprising alkylene terephthalate repeating ester units with other suitable ester groups may also be useful. Specifically useful ester units may include different alkylene terephthalate units, which can be present in the polymer chain as individual units, or as blocks of poly(alkylene terephthalates). Specifically suitable examples of such copolymers include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly( 1 ,4-cyclohexanedimethylene terephthalate).

Suitable poly(cycloalkylene diester)s may also include poly(alkylene cyclohexanedicarboxylate)s. Of these, a specific example is poly(1,4-cyclohexanedimethanol-1,4-cyclohexanedicarboxylate) (PCCD), having recurring units of formula (9):

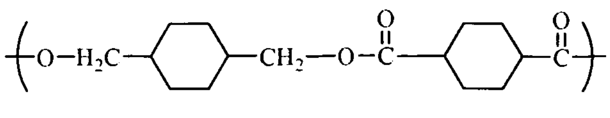

(9)

wherein, as described using formula (8), $R^2$ is a 1,4-cyclohexanedimethylene group derived from 1,4-cyclohexanedimethanol, and T is a cyclohexane ring derived from cyclohexanedicarboxylate or a chemical equivalent thereof, and may comprise the cis-isomer, the trans-isomer, or a combination comprising at least one of the foregoing isomers.

The polycarbonate and polyester and/or polyester-polycarbonate may be used in a weight ratio of 1:99 to 99:1, specifically 10:90 to 90:10, and more specifically 30:70 to 70:30, depending on the function and properties desired.

The polyester-polycarbonates may have a weight-averaged molecular weight ($M_w$) of 1,500 to 100,000, specifically 1,700 to 50,000, and more specifically 2,000 to 40,000. Molecular weight determinations are performed using gel permeation chromatography (GPC), using a crosslinked styrene-divinylbenzene column and calibrated to polycarbonate references. Samples are prepared at a concentration of about 1 mg/ml, and are eluted at a flow rate of about 1.0 ml/min.

Where used, it is desirable for a polyester-polycarbonate to have an MVR of about 5 to about 150 cc/10 min., specifically about 7 to about 125 cc/10 min, more specifically about 9 to about 110 cc/10 min, and still more specifically about 10 to about 100 cc/10 min., measured at 300°C and a load of 1.2 kilograms according to ASTM D1238-04. Commercial polyester blends with polycarbonate are marketed under the trade name XYLEX®, including for example XYLEX® X7300, and commercial polyester-polycarbonates are marketed under the tradename LEXAN® SLX polymers, including for example LEXAN® SLX-9000, and are available from GE Plastics.

The thermoplastic composition also comprises a polysiloxane-polycarbonate copolymer, also referred to as a polysiloxane-polycarbonate or a polycarbonate-polysiloxane. The polysiloxane (also referred to herein as "polydiorganosiloxane") blocks of the copolymer comprise repeating siloxane units (also referred to herein as "diorganosiloxane

units") of formula (10):

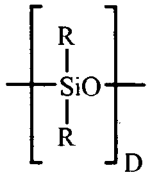

(10)

wherein each occurrence of R is same or different, and is a $C_{1-13}$ monovalent organic radical. For example, R may independently be a $C_1$-$C_{13}$ alkyl group, $C_1$-$C_{13}$ alkoxy group, $C_2$-$C_{13}$ alkenyl group, $C_2$-$C_{13}$ alkenyloxy group, $C_3$-$C_6$ cycloalkyl group, $C_3$-$C_6$ cycloalkoxy group, $C_6$-$C_{14}$ aryl group, $C_6$-$C_{10}$ aryloxy group, $C_7$-$C_{13}$ arylalkyl group, $C_7$-$C_{13}$ arylalkoxy group, $C_7$-$C_{13}$ alkylaryl group, or $C_7$-$C_{13}$ alkylaryloxy group. The foregoing groups may be fully or partially halogenated with fluorine, chlorine, bromine, or iodine, or a combination thereof. Combinations of the foregoing R groups may be used in the same copolymer.

The value of D in formula (10) may vary widely depending on the type and relative amount of each component in the thermoplastic composition, the desired properties of the composition, and like considerations. Generally, D may have an average value of 2 to 1,000, specifically 2 to 500, and more specifically 5 to 100. In one embodiment, D has an average value of 10 to 75, and in still another embodiment, D has an average value of 20 to 60. Where D is of a lower value, e.g., less than 40, it may be desirable to use a relatively larger amount of the polycarbonate-polysiloxane copolymer. Conversely, where D is of a higher value, e.g., greater than 40, it may be necessary to use a relatively lower amount of the polycarbonate-polysiloxane copolymer.

A combination of a first and a second (or more) polysiloxane-polycarbonate copolymer may be used, wherein the average value of D of the first copolymer is less than the average value of D of the second copolymer.

In one embodiment, the polydiorganosiloxane blocks are provided by repeating structural units of formula (11):

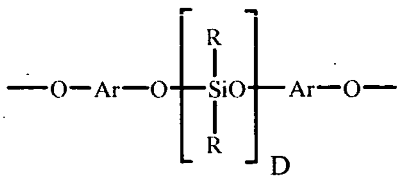

(11)

wherein D is as defined above; each R may independently be the same or different, and is as defined above; and each Ar may independently be the same or different, and is a substituted or unsubstituted $C_6$-$C_{30}$ arylene radical, wherein the bonds are directly connected to an aromatic moiety. Suitable Ar groups in formula (11) may be derived from a $C_6$-$C_{30}$ dihydroxyarylene compound, for example a dihydroxyarylene compound of formula (3), (4), or (7) above. Combinations comprising at least one of the foregoing dihydroxyarylene compounds may also be used. Specific examples of suitable dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulphide), and 1,1-bis(4-hydroxy-t-butylphenyl) propane. Combinations comprising at least one of the foregoing dihydroxy compounds may also be used.

Units of formula (11) may be derived from the corresponding dihydroxy compound of formula (12):

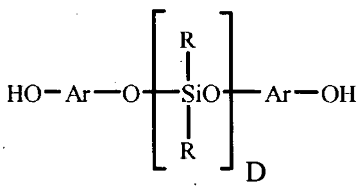

(12)

wherein R, Ar, and D are as described above. Compounds of formula (12) may be obtained by the reaction of a dihydroxyarylene compound with, for example, an alpha, omega-bisacetoxypolydiorangonosiloxane under phase transfer conditions.

In another embodiment, polydiorganosiloxane blocks comprise units of formula (13):

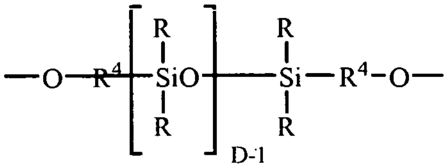

(13)

wherein R and D are as described above, and each occurrence of $R^{4'}$ is independently a divalent $C_1$-$C_{30}$ alkylene, and wherein the polymerized polysiloxane unit is the reaction residue of its corresponding dihydroxy compound. In a specific embodiment, the polydiorganosiloxane blocks are provided by repeating structural units of formula (14):

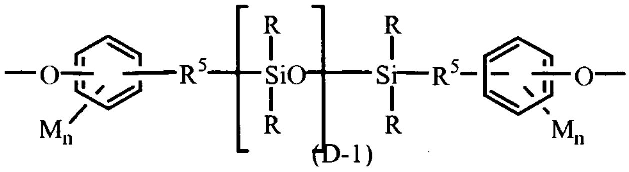

(14)

wherein R and D are as defined above. Each $R^5$ in formula (14) is independently a divalent $C_2$-$C_8$ aliphatic group. Each M in formula (14) may be the same or different, and may be a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ arylalkyl, $C_7$-$C_{12}$ arylalkoxy, $C_7$-$C_{12}$ alkylaryl, or $C_7$-$C_{12}$ alkylaryloxy, wherein each n is independently 0, 1, 2, 3, or 4.

In one embodiment, M is bromo or chloro, an alkyl group such as methyl, ethyl, or propyl, an alkoxy group such as methoxy, ethoxy, or propoxy, or an aryl group such as phenyl, chlorophenyl, or tolyl; $R^5$ is a dimethylene, trimethylene or tetramethylene group; and R is a $C_{1-8}$ alkyl, haloalkyl such as trifluoropropyl, cyanoalkyl, or aryl such as phenyl, chlorophenyl or tolyl. In another embodiment, R is methyl, or a mixture of methyl and trifluoropropyl, or a mixture of methyl and phenyl. In still another embodiment, M is methoxy, n is one, $R^5$ is a divalent $C_1$-$C_3$ aliphatic group, and R is methyl.

Units of formula (14) may be derived from the corresponding dihydroxy polydiorganosiloxane (15):

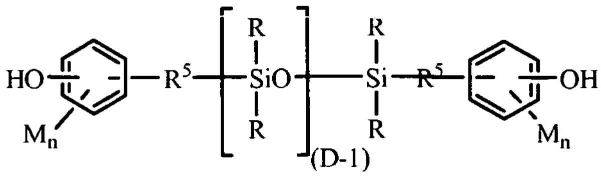

(15)

wherein R, D, M, $R^5$, and n are as described above. Such dihydroxy polysiloxanes can be made by effecting a platinum catalyzed addition between a siloxane hydride of formula (16):

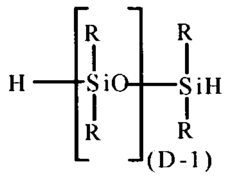

(16)

wherein R and D are as previously defined, and an aliphatically unsaturated monohydric phenol. Suitable aliphatically unsaturated monohydric phenols included, for example, eugenol, 2-allylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. Mixtures comprising at least one of the foregoing may also be used.

The polysiloxane-polycarbonate may comprise 50 to 99 wt% of carbonate units and 1 to 50 wt% siloxane units. Within this range, the polysiloxane-polycarbonate copolymer may comprise 70 to 98 wt%, specifically 75 to 97 wt% of carbonate units and 2 to 40 wt%, specifically 3 to 25 wt% siloxane units. The thermoplastic composition may comprise at least 1.0 wt% siloxane, based on the total weight of the composition, optionally, at least 1.5 wt%, or at least 2.0 wt% siloxane, at least 2.3 wt%, or optionally, at least 3.0 wt%, based on the total weight of the thermoplastic composition.

In an embodiment, the polysiloxane-polycarbonate may comprise polysiloxane units, and carbonate units derived from bisphenol A, e.g., the dihydroxy compound of formula (3) in which each of $A^1$ and $A^2$ is p-phenylene and $Y^1$ is isopropylidene. Polysiloxane-polycarbonates may have a weight average molecular weight of 2,000 to 100,000, specifically 5,000 to 50,000 as measured by gel permeation chromatography using a crosslinked styrene-divinyl benzene column, at a sample concentration of 1 milligram per milliliter, and as calibrated with polycarbonate standards.

With Transmission Electron Microscopy (TEM) it is possible to distinguish in the blend a polycarbonate matrix and embedded polysiloxane domains. The composition comprising the polysiloxane-polycarbonate copolymer has embedded polysiloxane domains with an average domain size between 15 and 65, specifically between 15 and 63 nanometers, more specifically between 15 and 45 nanometers.

The polysiloxane-polycarbonate can have a melt volume flow rate, measured at 300°C under a load of 1.2 kg, of 1 to 50 cubic centimeters per 10 minutes (cc/10 min), specifically 2 to 30 cc/10 min. Mixtures of polysiloxane-polycarbonates of different flow properties may be used to achieve the overall desired flow property. In an embodiment, exemplary polysiloxane-polycarbonates are marketed under the trade name LEXAN® EXL polycarbonates, available from GE Plastics.

The thermoplastic composition optionally further includes an impact modifier(s). These impact modifiers include elastomer-modified graft copolymers comprising (i) an elastomeric (i.e., rubbery) polymer substrate having a $T_g$ less than or equal to about 10°C, more specifically less than or equal to about -10°C, or more specifically about -40° to about -80°C, and (ii) a rigid polymeric superstrate grafted to the elastomeric polymer substrate. As is known, elastomer-modified graft copolymers may be prepared by first providing the elastomeric polymer, then polymerizing the constituent monomer (s) of the rigid phase in the presence of the elastomer to obtain the graft copolymer. The grafts may be attached as graft branches or as shells to an elastomer core. The shell may merely physically encapsulate the core, or the shell may be partially or essentially completely grafted to the core.

Materials for use as the elastomer phase include, for example, conjugated diene rubbers; copolymers of a conjugated diene with less than or equal to about 50 wt% of a copolymerizable monomer; olefin rubbers such as ethylene propylene copolymers (EPR) or ethylene-propylene-diene monomer rubbers (EPDM); ethylene-vinyl acetate rubbers; silicone rubbers; elastomeric $C_{1-8}$ alkyl (meth)acrylates; elastomeric copolymers of $C_{1-8}$ alkyl (meth)acrylates with butadiene and/or styrene; or combinations comprising at least one of the foregoing elastomers.

Conjugated diene monomers for preparing the elastomer phase include those of formula (28):

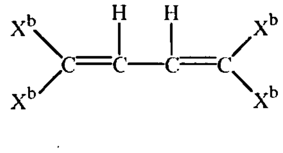

(28)

wherein each $X^b$ is independently hydrogen, $C_1$-$C_5$ alkyl, or the like. Examples of conjugated diene monomers that may be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as combinations comprising at least one of the foregoing conjugated

diene monomers. Specific conjugated diene homopolymers include polybutadiene and polyisoprene.

Copolymers of a conjugated diene rubber may also be used, for example those produced by aqueous radical emulsion polymerization of a conjugated diene and at least one monomer copolymerizable therewith. Monomers that are useful for copolymerization with the conjugated diene include monovinylaromatic monomers containing condensed aromatic ring structures, such as vinyl naphthalene, vinyl anthracene, and the like, or monomers of formula (29):

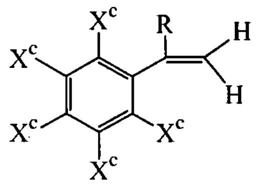

(29)

wherein each $X^c$ is independently hydrogen, $C_1$-$C_{12}$ alkyl, $C_3$-$C_{12}$ cycloalkyl, $C_6$-$C_{12}$ aryl, $C_7$-$C_{12}$ aralkyl, $C_7$-$C_{12}$ alkaryl, $C_1$-$C_{12}$ alkoxy, $C_3$-$C_{12}$ cycloalkoxy, $C_6$-$C_{12}$ aryloxy, chloro, bromo, or hydroxy, and R is hydrogen, $C_1$-$C_5$ alkyl, bromo, or chloro. Exemplary monovinylaromatic monomers that may be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, and combinations comprising at least one of the foregoing compounds. Styrene and/or alpha-methylstyrene may be used as monomers copolymerizable with the conjugated diene monomer.

Other monomers that may be copolymerized with the conjugated diene are monovinylic monomers such as itaconic acid, acrylamide, N-substituted acrylamide or methacrylamide, maleic anhydride, maleimide, N-alkyl-, aryl-, or haloaryl-substituted maleimide, glycidyl (meth)acrylates, and monomers of the generic formula (30):

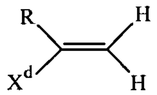

(30)

wherein R is hydrogen, $C_1$-$C_5$ alkyl, bromo, or chloro, and $X^d$ is cyano, $C_1$-$C_{12}$ alkoxycarbonyl, $C_1$-$C_{12}$ aryloxycarbonyl, hydroxy carbonyl, or the like. Examples of monomers of formula (30) include acrylonitrile, methacrylonitrile, alpha-chloroacrylonitrile, beta-chloroacrylonitrile, alpha-bromoacrylonitrile, acrylic acid, methyl (meth)acrylate, ethyl (meth) acrylate, n-butyl (meth)acrylate, t-butyl (meth)acrylate, n-propyl (meth)acrylate, isopropyl (meth)acrylate, 2-ethylhexyl (meth)acrylate, and the like, and combinations comprising at least one of the foregoing monomers. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers may also be used.

(Meth)acrylate monomers for use in the elastomeric phase may be cross-linked, particulate emulsion homopolymers or copolymers of $C_{1-8}$ alkyl (meth)acrylates, in particular $C_{4-6}$ alkyl acrylates, for example n-butyl acrylate, t-butyl acrylate, n-propyl acrylate, isopropyl acrylate, 2-ethylhexyl acrylate, and the like, and combinations comprising at least one of the foregoing monomers. The $C_{1-8}$ alkyl (meth)acrylate monomers may optionally be polymerized in admixture with less than or equal to about 15 wt% of comonomers of formulas (28), (29), or (30), based on the total monomer weight. Exemplary comonomers include but are not limited to butadiene, isoprene, styrene, methyl methacrylate, phenyl methacrylate, phenethylmethacrylate, N-cyclohexylacrylamide, vinyl methyl ether or acrylonitrile, and combinations comprising at least one of the foregoing comonomers. Optionally, less than or equal to about 5 wt% of a polyfunctional crosslinking comonomer may be present, based on the total monomer weight. Such polyfunctional crosslinking comonomers may include, for example, divinylbenzene, alkylenediol di(meth)acrylates such as glycol bisacrylate, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and the like, as well as combinations comprising at least one of the foregoing crosslinking agents.

The elastomer phase may be polymerized by mass, emulsion, suspension, solution or combined processes such as bulk-suspension, emulsion-bulk, bulk-solution or other techniques, using continuous, semi-batch, or batch processes. The particle size of the elastomer substrate is not critical. For example, an average particle size of about 0.001 to about 25 micrometers, specifically about 0.01 to about 15 micrometers, or even more specifically about 0.1 to about 8 micrometers may be used for emulsion based polymerized rubber lattices. A particle size of about 0.5 to about

10 micrometers, specifically about 0.6 to about 1.5 micrometers may be used for bulk polymerized rubber substrates. Particle size may be measured by simple light transmission methods or capillary hydrodynamic chromatography (CHDF). The elastomer phase may be a particulate, moderately cross-linked conjugated butadiene or $C_{4-6}$ alkyl acrylate rubber, and specifically has a gel content greater than 70%. Also useful are combinations of butadiene with styrene and/or $C_{4-6}$ alkyl acrylate rubbers.

The elastomeric phase comprises about 5 to about 95 wt% of the total graft copolymer, more specifically about 20 to about 90 wt%, and even more specifically about 40 to about 85 wt% of the elastomer-modified graft copolymer, the remainder being the rigid graft phase.

The rigid phase of the elastomer-modified graft copolymer may be formed by graft polymerization of a combination comprising a monovinylaromatic monomer and optionally at least one comonomer in the presence of at least one elastomeric polymer substrates. The above-described monovinylaromatic monomers of formula (29) may be used in the rigid graft phase, including styrene, alpha-methyl styrene, halostyrenes such as dibromostyrene, vinyltoluene, vinylxylene, butylstyrene, para-hydroxystyrene, methoxystyrene, or the like, or combinations comprising at least one of the foregoing monovinylaromatic monomers. Useful comonomers include, for example, the above-described monovinylic monomers and/or monomers of the general formula (30). In one embodiment, R is hydrogen or $C_1$-$C_2$ alkyl, and $X^d$ is cyano or $C_1$-$C_{12}$ alkoxycarbonyl. Exemplary comonomers for use in the rigid phase include acrylonitrile, methacrylonitrile, methyl (meth)acrylate, ethyl (meth)acrylate, n-propyl (meth)acrylate, isopropyl (meth)acrylate, and the like, and combinations comprising at least one of the foregoing comonomers.

The relative ratio of monovinylaromatic monomer and comonomer in the rigid graft phase may vary widely depending on the type of elastomer substrate, type of monovinylaromatic monomer(s), type of comonomer(s), and the desired properties of the impact modifier. The rigid phase may generally comprise less than or equal to about 100 wt% of monovinyl aromatic monomer, specifically about 30 to about 100 wt%, more specifically about 50 to about 90 wt% monovinylaromatic monomer, with the balance of the rigid phase being comonomer(s).

Depending on the amount of elastomer-modified polymer present, a separate matrix or continuous phase of ungrafted rigid polymer or copolymer may be simultaneously obtained along with the elastomer-modified graft copolymer. Typically, such impact modifiers comprise about 40 to about 95 wt% elastomer-modified graft copolymer and about 5 to about 65 wt% graft copolymer, based on the total weight of the impact modifier. In another embodiment, such impact modifiers comprise about 50 to about 85 wt%, more specifically about 75 to about 85 wt% rubber-modified graft copolymer, together with about 15 to about 50 wt%, more specifically about 15 to about 25 wt% graft copolymer, based on the total weight of the impact modifier.

Another specific type of elastomer-modified impact modifier comprises structural units derived from at least one silicone rubber monomer, a branched acrylate rubber monomer having the formula $H_2C=C(R^d)C(O)OCH_2CH_2R^e$, wherein $R^d$ is hydrogen or a $C_1$-$C_8$ linear or branched alkyl group and $R^e$ is a branched $C_3$-$C_{16}$ alkyl group; a first graft link monomer; a polymerizable alkenyl-containing organic material; and a second graft link monomer. The silicone rubber monomer may comprise, for example, a cyclic siloxane, tetraalkoxysilane, trialkoxysilane, (acryloxy)alkoxysilane, (mercaptoalkyl)alkoxysilane, vinylalkoxysilane, or allylalkoxysilane, alone or in combination, e.g., decamethylcyclopentasiloxane, dodecamethylcyclohexasiloxane, trimethyltriphenylcyclotrisiloxane, tetramethyltetraphenylcyclotetrasiloxane, tetramethyltetravinylcyclotetrasiloxane, octaphenylcyclotetrasiloxane, octamethylcyclotetrasiloxane and/or tetraethoxysilane.

Exemplary branched acrylate rubber monomers include iso-octyl acrylate, 6-methyloctyl acrylate, 7-methyloctyl acrylate, 6-methylheptyl acrylate, and the like, or a combination comprising at least one of the foregoing. The polymerizable alkenyl-containing organic material may be, for example, a monomer of formula (28) or (30), e.g., styrene, alphamethylstyrene, acrylonitrile, methacrylonitrile, or an unbranched (meth)acrylate such as methyl methacrylate, 2-ethylhexyl methacrylate, methyl acrylate, ethyl acrylate, n-propyl acrylate, or the like, alone or in combination.

The first graft link monomer may be an (acryloxy)alkoxysilane, a (mercaptoalkyl)alkoxysilane, a vinylalkoxysilane, or an allylalkoxysilane, alone or in combination, e.g., (gamma-methacryloxypropyl)(dimethoxy) methylsilane and/or (3-mercaptopropyl)trimethoxysilane. The second graft link monomer is a polyethylenically unsaturated compound having at least one allyl group, such as allyl methacrylate, triallyl cyanurate, triallyl isocyanurate, and the like, or a combination comprising at least one of the foregoing.

The silicone-acrylate impact modifiers can be prepared by emulsion polymerization, wherein, for example a silicone rubber monomer is reacted with a first graft link monomer at a temperature from about 30 to about 110°C to form a silicone rubber latex, in the presence of a surfactant such as dodecylbenzenesulfonic acid. Alternatively, a cyclic siloxane such as cyclooctamethyltetrasiloxane and a tetraethoxyorthosilicate may be reacted with a first graft link monomer such as (gamma-methacryloxypropyl) methyldimethoxysilane. A branched acrylate rubber monomer is then polymerized with the silicone rubber particles, optionally in presence of a cross linking monomer, such as allyl methacrylate, in the presence of a free radical generating polymerization catalyst such as benzoyl peroxide. This latex is then reacted with a polymerizable alkenyl-containing organic material and a second graft link monomer. The latex particles of the graft silicone-acrylate rubber hybrid may be separated from the aqueous phase through coagulation (by treatment with

a coagulant) and dried to a fine powder to produce the silicone-acrylate rubber impact modifier. This method can be generally used for producing the silicone-acrylate impact modifier having a particle size of about 100 nanometers to about 2 micrometers.

Processes known for the formation of the foregoing elastomer-modified graft copolymers include mass, emulsion, suspension, and solution processes, or combined processes such as bulk-suspension, emulsion-bulk, bulk-solution or other techniques, using continuous, semi-batch, or batch processes.

In one embodiment the foregoing types of impact modifiers are prepared by an emulsion polymerization process that is free of basic materials (i.e., bases) such as alkali metal salts of $C_{6-30}$ fatty acids, for example sodium stearate, lithium stearate, sodium oleate, potassium oleate, and the like, alkali metal carbonates, amines such as dodecyl dimethyl amine, dodecyl amine, and the like, and ammonium salts of amines. Such materials are commonly used as surfactants in emulsion polymerization, and may catalyze transesterification and/or degradation of polycarbonates. Instead, ionic sulfate, sulfonate or phosphate surfactants may be used in preparing the impact modifiers, particularly the elastomeric substrate portion of the impact modifiers. Useful surfactants include, for example, $C_{1-22}$ alkyl or $C_{7-25}$ alkylaryl sulfonates, $C_{1-22}$ alkyl or $C_{7-25}$ alkylaryl sulfates, $C_{1-22}$ alkyl or $C_{7-25}$ alkylaryl phosphates, substituted silicates, or a combination comprising at least one of the foregoing. A specific surfactant is a $C_{6-16}$, specifically a $C_{8-12}$ alkyl sulfonate. This emulsion polymerization process is described and disclosed in various patents and literature of such companies as Rohm & Haas and General Electric Company. In the practice, any of the above-described impact modifiers may be used providing it is free of the alkali metal salts of fatty acids, alkali metal carbonates and other basic materials.

A specific impact modifier of this type is a methyl methacrylate-butadiene-styrene (MBS) impact modifier wherein the butadiene substrate is prepared using above-described sulfonates, sulfates, or phosphates as surfactants. Other examples of elastomer-modified graft copolymers besides ABS and MBS include but are not limited to acrylonitrile-styrene-butyl acrylate (ASA), methyl methacrylate-acrylonitrile-butadiene-styrene (MABS), and acrylonitrile-ethylene-propylene-diene-styrene (AES). Acrylonitrile-butadiene-styrene graft copolymers are well known in the art and many are commercially available, including, for example, the high-rubber acrylonitrile-butadiene-styrene resins available from GE Plastics and marketed under the trade name BLENDEX®, of grades 131, 336, 338, 360, and 415. When present as an impact modifier in a blend with another thermoplastic polymer, impact modifiers can be present in the thermoplastic composition in amounts of 0.1 to 30 percent by weight, based on the total weight of thermoplastic polymer, black dye, and fluorescent dye.

The composition may further comprise an ungrafted rigid copolymer. The rigid copolymer is additional to any rigid copolymer present in the impact modifier. It may be the same as any of the rigid copolymers described above, without the elastomer modification. The rigid copolymers generally have a Tg greater than about 15°C, specifically greater than about 20°C, and include, for example, polymers derived from monovinylaromatic monomers containing condensed aromatic ring structures, such as vinyl naphthalene, vinyl anthracene and the like, or monomers such as styrene and alpha-methyl styrene; monovinylic monomers such as itaconic acid, acrylamide, N-substituted acrylamide or methacrylamide, maleic anhydride, maleimide, N-alkyl, aryl or haloaryl substituted maleimide, glycidyl (meth)acrylates, and monomers such as acrylonitrile, methyl acrylate and methyl methacrylate; and copolymers of the foregoing, for example styrene-acrylonitrile (SAN), styrene-alpha-methyl styrene-acrylonitrile, methyl methacrylate-acrylonitrile-styrene, and methyl methacrylate-styrene.

The rigid copolymer may comprise about 1 to about 99 wt.%, specifically about 20 to about 95 wt.%, more specifically about 40 to about 90 wt.% of vinylaromatic monomer, together with 1 to about 99 wt.%, specifically about 5 to about 80 wt.%, more specifically about 10 to about 60 wt.% of copolymerizable monovinylic monomers. In one embodiment the rigid copolymer is SAN, which may comprise about 50 to about 99 wt.% styrene, with the balance acrylonitrile, specifically about 60 to about 90 wt.% styrene, and more specifically about 65 to about 85 wt.% styrene, with the remainder acrylonitrile.

The rigid copolymer may be manufactured by bulk, suspension, or emulsion polymerization, and is substantially free of impurities, residual acids, residual bases or residual metals that may catalyze the hydrolysis of polycarbonate. In one embodiment, the rigid copolymer is manufactured by bulk polymerization using a boiling reactor. The rigid copolymer may have a weight average molecular weight of about 50,000 to about 300,000 as measured by GPC using polystyrene standards. In one embodiment, the weight average molecular weight of the rigid copolymer is about 70,000 to about 190,000.

The thermoplastic polymer has a high infrared light transmission of greater than 65%, specifically greater than 75%, more specifically greater than 80%, when measured using a molded article having a thickness of 1.0 millimeters (mm) and consisting of the thermoplastic polymer, according to the procedure described below at a wavelength of greater than 800 nm. In an embodiment, a molded article having a thickness of 1.0 mm, and consisting of the thermoplastic polymer, has a percent transmission of infrared light, of greater than or equal to 60%, specifically greater than or equal to 75%, and still more specifically greater than or equal to 80% transmission, when measured at a wavelength of 800 nm. In some embodiments, the thermoplastic polymer has a high infrared light transmission of greater than 65%, specifically greater than 75%, more specifically greater than 80%, when measured using a molded article having a thickness

of 1.0 millimeters (mm) and consisting of the thermoplastic polymer, at a wavelength of greater than 1060 nm.

The thermoplastic polymer desirably has a dE flop of less than 6, optionally less than 4, and in some embodiments, optionally less than 2.

The thermoplastic composition comprises a dye or combination of dyes as a colorant. Any dye can be used, provided the dye does not significantly adversely affect the desired properties of the thermoplastic composition. In an embodiment, the dye or dye combination has a low absorbance in the infrared range above wavelengths of 760 nm, when present in a concentration that is effective to provide the desired color. Useful dyes desirably have a dark or black color when used in a concentration sufficient to provide the desired absorbance characteristics for the thermoplastic composition. In an embodiment, the dye or dye combination is desirably a black or dark color dye or combination of two or more dyes that provides black or other dark color, such as dark blue, purple, dark green, dark red, or other dark color. Suitable dyes include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly ($C_{2-8}$) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; and the like; and a combination comprising at least one of the foregoing dyes. Exemplary dyes include C.I. Solvent Yellow (6, 9, 17, 19, 21, 31, 35, 61, 80, 100, 102, 103, 105); C.I. Solvent Orange (2, 7, 13, 14, 66); C.I. Solvent Red (5, 16, 17, 18, 19, 22, 23, 135, 143, 145, 146, 149, 150, 151, 157, 158); C.I. Solvent Violet (31, 32, 33, 37); C.I. Solvent Blue (22, 63, 78, 83, 84, 85, 86, 91, 94, 95, 104); C.I. Solvent Green (3, 24, 25, 28), and C.I. Solvent Brown (3, 9). In addition to the above, other exemplary commercially available dyes include those marketed under the Aizen Sot® trade name and made by Hodogaya Chemical Co., Ltd., including Aizen Sot Yellow-1, 3, 4, Aizen Sot Orange-1, 2, 3, Aizen Sot Scarlet-1, Aizen Sot Red-1, 2, 3, Aizen Sot Brown-2, Aizen Sot Blue-1, 2, Aizen Sot Violet-1, Aizen Sot Green-1, 2, 3, and Aizen Sot Black-1, 4, 6, 8; dyes marketed under the Sudan® trade name including Sudan Yellow-140, 150, Sudan Orange-220, Sudan Red-290, 380, 460, and Sudan Blue-670 (Trademark), made by BASF Corp.; dyes marketed under the Diaresin® trade name, including Diaresin Yellow-3G, F, H2G, HG, HC, HL, Diaresin Orange-HS, G, Diaresin Red-GG, S, HS, A, K, H5B, Diaresin Violet-D, Diaresin Blue-J, G, N, K, P, H3G, 4G, Diaresin Green-C, and Diaresin Brown-A, made by Mitsubishi Chemical Industries, Ltd.; dyes made under the Oil Color® trade name and including Oil Color Yellow-3G, GG-S, 105, Oil Color Orange-PS, PR, 201, Oil Color Scarlet-308, Oil Color Red-5B, Oil Color Brown-GR, 416, Oil Color Green-BG, 502, Oil Color Blue-BOS, HN, and Oil Color Black-HBB, 803, EE, EX, made by Orient Chemical Industries, Ltd.; dyes made under the Sumiplast® trade name and including Sumiplast Blue GP, OR, Sumiplast Red FB, 3B, and Sumiplast Yellow FL7G, GC, made by Sumitomo Chemical Co., Ltd.; and dyes made under the Kayaron® and Kayaset® tradenames including Kayaron Polyester Black EX-SH300, Kayaset Blue A-2R and Kayaset Red-B, made by Nippon Kayaku Co., Ltd.; dyes made under the Levafix® tradenames including Levafix Brilliant Yellow E-GA, Levafix Yellow E2RA, Levafix Black EB, Levafix Black E-2G, Levafix Black P-36A, Levafix Black PN-L, Levafix Brilliant Red E6BA, and Levafix Brilliant Blue EFFA, available from Bayer; dyes made under the Procion® tradename including Procion Turquoise PA, Procion Turquoise HA, Procion Turquoise H-5G, Procion Turquoise H-7G, Procion Red MX-5B, Procion Red MX 8B GNS, Procion Red G, Procion Yellow MC-8G, Procion Black H-EXL, Procion Black P-N, Procion Blue MX-R, Procion Blue MX-4GD, Procion Blue MX-G, and Procion Blue MX-2GN, available from ICI; Dyes under the Cibacron® and Lanasol® tradenames such as Cibacron Red F-B, Cibacron Black BG, Lanasol Black B, Lanasol Red 5B, Lanasol Red B, and Lanasol Yellow 4G, available from Ciba-Geigy; dyes made under the Basilen® tradename such as Basilen Black P-BR, Basilen Yellow EG, Basilen Brilliant Yellow P-3GN, Basilen Yellow M-6GD, Basilen Brilliant Red P-3B, Basilen Scarlet E-2G, Basilen Red E-B, Basilen Red E-7B, Basilen Scarlet E-2G, Basilen Red E-B, Basilen Red E-7B, Basilen Red-M5B, Basilen Blue E-R, Basilen Brilliant Blue P-3R, Basilen Black P-BR, Basilen Turquoise Blue P-GR, Basilen Turquoise M-2G, Basilen Turquoise E-G, and Basilen Green E-6B, available from BASF; dyes made under the Sumifix® tradename including Sumifix Turquoise Blue G, Sumifix Turquoise Blue H-GF, Sumifix Black B. Sumifix Black H-BG, Sumifix Yellow 2GC, Sumifix Supra Scarlet 2GF, and Sumifix Brilliant Red 5BF, available from Sumitomo Chemical Company; dyes made under the Intracron® tradename including Intracron Yellow C-8G, Intracron Red C-8B, Intracron Turquoise Blue GE, Intracron Turquoise HA, and Intracron Black RL, available from Crompton and Knowles, Dyes and Chemicals Division; dyes made under the Duasyn® tradename including Duasyn Black RL-SF, Duasyn Brilliant Yellow GL-SF, Duasyn Brilliant Red F3B-SF, and Duasyn Red 3B-SF, available from Hoechst; dyes made under the Macrolex® trade name including Macrolex Blue 2B, Macrolex Blue 3R, Macrolex Blue RR, Macrolex Fluorescent Red G, Macrolex Fluorescent Yellow 10GN, Macrolex Green 5B, Macrolex Green G, Macrolex Orange 3G, Macrolex Orange R, Macrolex Red 5B, Macrolex Red B, Macrolex Red E2G, Macrolex Red EG, Macrolex Red G, Macrolex Red H, Macrolex Red Violet R, Macrolex Violet 3R, Macrolex Violet B, Macrolex Yellow 3G, Macrolex Yellow 4G, Macrolex Yellow 6G, Macrolex Yellow E2R, Macrolex Yellow G and Macrolex Yellow RN available from Lanxess Deutschland GmbH; Reactive Yellow 86, available from Sigma Chemical Company, Reactive

Black 5, Reactive Blue 4, Reactive Blue 15, Reactive Orange 16, Reactive Red 4, and Reactive Yellow 2, available from Aldrich Chemical Company Incorporated, and the like. A combination comprising at least one of the foregoing dyes may be used.

Additional exemplary dyes include the FLEXO®, Auramine®, Chrysoidine®, Victoria®, Crystal®, and Spirit® dyes available from BASF Corp. distributor in Clifton, N.J., which include diarylmethane dyes such as Yellow 105 Low-Dusting (also known as Basic Yellow 2203), Yellow 110 (Auramine FA), Yellow 110 Low-Dusting (Auramine FA-NS); Yellow 112 (Auramine FWA), and Yellow 112 Low-Dusting (Auramine FWA-NS); azomethine dyes such as Yellow 11B Low-Dusting; monoazo dyes such as Orange 204 (Chrysoidine FL); triarylmethane dyes including Violet 600 (Methyl Violet FN), Violet 615 (Crystal Violet FN), Blue 630 (Victoria blue FBR), Blue 838 (Victoria Pure Blue FBO), Blue 640 (Victoria Blue F8), Blue 640 Low-Dusting (Victoria Blue FB-NS), Blue 680 (Victoria Pure Blue FGA), and Blue 810 (Victoria Cyan FBG); and mixed dyes such as Green 990 (Spirit Green IY Conc.), Black XII (Flexo Black GL) and Blue 680 (Victoria Pure Blue FGA) also known as Basic Blue 81 C.I.

In an embodiment, a dye or combination of dyes that provide dark color, such as black, blue or red, is desirable. In an embodiment, a single black or dark color dye can be used in a coloring amount. In another embodiment, a combination of two or more dyes can be used to provide a black or dark color that can be used in the thermoplastic composition in a coloring amount. Two or more dyes that are complementary to each other are desirably used. As used herein, complementary dyes are dyes that have complementary absorbances such that the combination of complementary dyes absorbs light over a greater range of wavelengths than any one of the dyes would when used alone. In an exemplary embodiment, a combination of dyes which, when blended together and dispersed in a thermoplastic polymer provide a black or dark color, comprises C.I. Solvent Green 3, available as Macrolex® Green 5B, and C.I. Solvent Red 135, available as Macrolex® Red EG, both available from Lanxess. In an embodiment, where two dyes are used to provide a black or dark color dye, the dyes are used in a weight ratio of 1:99 to 99:1. In another embodiment, where the black or dark color dye comprises a blend of more than two dyes, the dyes are used in a weight ratio sufficient to provide a suitable black or other dark color, where the black or other dark color is used in a coloring amount sufficient to color the thermoplastic composition.

The dark color dye or dye combination is used in a coloring amount of 0.01 to 5 wt%, specifically 0.02 to 2 wt%, and more specifically 0.05 to 1 wt%, based on the total weight of thermoplastic composition.

A fluorescent brightener can also be included in the composition. Fluorescent brighteners include fluorescent compounds which, when combined with a dye having relatively low fluorescence, act to increase the intensity of the fluorescent emissions from the dye combination. In an embodiment, a fluorescent brightener is used in combination with a blue fluorescent dye. Exemplary fluorescent brighteners include those marketed under the tradename Uvitex® and available from Ciba Specialty Chemicals, or DIPHYL® and BLANKOPHOR® available from Lanxess. In a specific exemplary embodiment, a useful combination of a blue dye and fluorescent brightener includes Uvitex® OB, available from Ciba Specialty Chemicals, as fluorescent brightener. It will be understood that the foregoing fluorescent brightener is exemplary and should not be considered as limiting thereto. Where used, a fluorescent brightener may be included in an amount of 0.005 to 25 wt%, specifically 0.01 to 20 wt%, and more specifically 0.015 to 15 wt%, based on the total weight of thermoplastic composition.

Typically, dyes have been used to prepare infrared transmissive thermoplastic compositions. Articles prepared using such thermoplastic compositions have a high infrared light transmission (%T) measured as a percentage of incident light transmitted through an article prepared using the thermoplastic composition, for infrared light of wavelengths of greater than or equal to 760 nanometers (nm), optionally greater than or equal to 800 nm, a region of the spectrum referred to generally as the "near infrared", and abbreviated as both "near-IR" and also "NIR". Desirably, articles prepared from infrared transmissive thermoplastic compositions, such as, for example, windows for infrared-transmitting devices, have high absorbance in the visible region, as measured from 400 to 650 nm. This absorbance is useful for minimizing stray light in the interior of the device. In addition, the high absorbance in the visible region provides a desirable aesthetic effect wherein the interior of the device is not visible to the unaided, naked eye. However, use of quantities of such dyes that is sufficient to provide the desired absorbance across this range of wavelengths also imparts a dark or black color to the article. Such dark color is undesirable for applications where the window color is desirably a bright color, e.g., a bright red, yellow, green, blue, or intermediate color. Addition of further dyes or pigments to the dark colored thermoplastics typically only further darkens the thermoplastic composition, or may provide a darkened shade of the colorant. Multilayer thermoplastic compositions having an underlayer that has high visible light absorbance, overlaid with a layer having the desired finish color, may be used to provide the desired visual effect. However, articles having this construction are more complicated to produce and are more limited in application, where it is significantly more difficult in time, manufacturability, and robustness of construction to produce small molded multilayer articles, or molded articles with non-uniform topographic features. Such articles produced in this way, in addition to proving costly to produce, can have poor uniformity and undesirable optical properties.

Surprisingly, it has been found that a thermoplastic composition comprising a combination of an aromatic polycarbonate, a polycarbonate-polysiloxane copolymer, and an infrared transmissive dye package having a ark color,

wherein the siloxane domains in the composition have an average domain size of between 15 and 65 nanometers, optionally between 15 and 45 nanometers, provides a colored thermoplastic that is transmissive in the infrared at wavelengths greater than 800 nm, optionally at wavelengths greater than 1060 nm, absorbing in the visible range from 400 to 650 nm, and has an aesthetically desirable colored appearance with reduced dE flop, such as a dE flop less than 6. The infrared transmissive thermoplastic polymer has a high infrared light transmission (%T) measured as a percentage of incident light transmitted through an article prepared using the thermoplastic composition, for infrared light of wavelengths of greater than or equal to 800 nanometers (nm), a region of the spectrum referred to generally as both the "near infrared" and "near-IR". In addition, the dye or dye combination also has a high infrared light transmission at wavelengths of greater than 800 nm, and optionally at wavelengths of greater than 1060 nm. The thermoplastic composition also desirably can provide an molded article with a surface reflectance that can provide for a glossy appearance or muted gloss appearance. In addition, the color visible in the molded articles comprising the thermoplastic composition has high color brightness to the naked, unaided eye, and a high aesthetic appeal, in contrast to the dark or black color of a similar molded article prepared with a black or dark color dye and other optional dyes.

In addition, the use of pigments instead of dyes does not provide sufficient transmission in the infrared range because the pigments scatter infrared light. Furthermore, pigments scatter visible lights as well, which results in diminishing the depth of color available at the surface of the article. Therefore, use of pigments does not provide the desired near infrared light transmission and depth of color. Use of polymeric dyes, or dye-impregnated latex particles, where the refractive index of the backbone material is not significantly different from the refractive index of the surrounding matrix polymer, can provide the dye in a particulate form which does not significantly adversely affect the desired properties of the thermoplastic composition and articles prepared therefrom.

The thermoplastic composition desirably has a high light transmission of greater than 65%, optionally greater than 70%, optionally greater than 80%, when measured according to the procedure described below, at a wavelength of greater than 800 nm. In an embodiment, a molded article having a thickness of 1.0 mm, and consisting of the aromatic polycarbonate, the polycarbonate-polysiloxane copolymer, and the black or dark color dye or combination of dyes, has a percent transmission of infrared light, of greater than or equal to 65%, specifically greater than or equal to 70%, and still more specifically greater than or equal to 80% transmission, when measured at a wavelength of 800 nm.

The thermoplastic composition may further include various other additives ordinarily incorporated with thermoplastic compositions of this type, with the proviso that the additives are selected so as not to adversely affect the desired properties of the thermoplastic composition. Mixtures of additives may be used. Such additives may be mixed at a suitable time during the mixing of the components for forming the thermoplastic composition.

The thermoplastic composition may include fillers or reinforcing agents with the proviso that the additives are selected so as not to adversely affect the desired properties of the thermoplastic composition. The fillers and reinforcing agents may desirably be in the form of nanoparticles, i.e., particles with a median particle size ($D_{50}$) smaller than 100 nm as determined using light scattering methods. Where used, suitable fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as $TiO_2$, aluminum oxide, magnesium oxide, or the like; calcium sulfate (as its anhydride, dihydrate or trihydrate); calcium carbonates such as chalk, limestone, marble, synthetic precipitated calcium carbonates, or the like; talc, including fibrous, modular, needle shaped, lamellar talc, or the like; wollastonite; surface-treated wollastonite; glass spheres such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polymeric matrix resin, or the like; single crystal fibers or "whiskers" such as silicon carbide, alumina, boron carbide, iron, nickel, copper, or the like; fibers (including continuous and chopped fibers) such as asbestos, carbon fibers, glass fibers, such as E, A, C, ECR, R, S, D, or NE glasses, or the like; sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, or the like, or combinations comprising at least one of the foregoing fillers or reinforcing agents.

Specifically, useful fillers contemplated herein are visual effects fillers that possess compositional, shape and dimensional qualities suitable to the reflection and/or refraction of light. Visual effect fillers include those having planar

facets and can be multifaceted or in the form of flakes, shards, plates, leaves, wafers, and the like. The shape can be irregular or regular. A non-limiting example of a regular shape is a hexagonal plate. Visual effect fillers are two dimensional, plate-type fillers, wherein a particle of a plate type filler has a ratio of its largest dimension to smallest dimension of greater than or equal to 3:1, specifically greater than or equal to 5:1, and more specifically greater than or equal to 10:1. The largest dimension so defined can also be referred to as the diameter of the particle. Plate-type fillers have a distribution of particle diameters described by a minimum and a maximum particle diameter. The minimum particle diameter is described by the lower detection limit of the method used to determine particle diameter, and corresponds to it. A typical method of determining particle diameters is laser light scattering, which can for example have a lower detection limit for particle diameter of 0.6 nanometers. It should be noted that particles having a diameter less than the lower detection limit may be present but not observable by the method. The maximum particle diameter is typically less than the upper detection limit of the method. The maximum particle diameter herein may be less than or equal to 1,000 micrometers, specifically less than or equal to 750 micrometers, and more specifically less than or equal to 500 micrometers. The distribution of particle diameters can be unimodal, bimodal, or multimodal. The diameter can be described more generally using the mean of the distribution of the particle diameters, also referred to as the mean diameter. Specifically, useful particles have a mean diameter of 1 to 100 micrometers, specifically 5 to 75 micrometers, and more specifically 10 to 60 micrometers. Specific reflective fillers are further of a composition having an optically dense surface exterior finish useful for reflecting incident light. Metallic and non-metallic fillers such as those based on aluminum, silver, copper, bronze, steel, brass, gold, tin, silicon, alloys of these, combinations comprising at least one of the foregoing metals, and the like, are specifically useful. Also specifically useful are inorganic fillers prepared from a composition presenting a surface that is useful for reflecting and/or refracting incident light. In contrast to a reflective filler, a refractive filler having refractive properties can be at least partially transparent, i.e., can allow transmission of a percentage of incident light, and can provide optical properties based on reflection, refraction, or a combination of reflection and refraction of incident light. Inorganic fillers having light reflecting and/or refracting properties useful herein may include micas, alumina, lamellar talc, silica, silicon carbide, glass, combinations comprising at least one of the foregoing inorganic fillers, and the like.

The fillers and reinforcing agents may be coated with a layer of metallic material to facilitate conductivity, or surface treated with silanes to improve adhesion and dispersion with the polymeric matrix resin. In addition, the reinforcing fillers may be provided in the form of monofilament or multifilament fibers and may be used either alone or in combination with other types of fiber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Fillers can be used in amounts of 0 to 90 percent by weight, based on the total weight of thermoplastic composition.

The thermoplastic composition can include an antioxidant. Suitable antioxidant additives include, for example, organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants can be used in amounts of 0.0001 to 1 percent by weight, based on the total weight of thermoplastic composition.

Suitable heat stabilizer additives include, for example, organophosphites such as triphenyl phosphite, tris-(2,6-dimethylphenyl)phosphite, tris-(mixed mono-and di-nonylphenyl)phosphite or the like; phosphonates such as dimethylbenzene phosphonate or the like, phosphates such as trimethyl phosphate, or the like, or combinations comprising at least one of the foregoing heat stabilizers. Heat stabilizers can be used in amounts of 0.0001 to 1 percent by weight, based on the total weight of thermoplastic composition.

Light stabilizers and/or ultraviolet light (UV) absorbing additives may also be used. Suitable light stabilizer additives include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone, or the like, or combinations comprising at least one of the foregoing light stabilizers. Light stabilizers can be used in amounts of 0.0001 to 1 percent by weight, based on the total weight of thermoplastic composition.

Suitable UV absorbing additives include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB® 5411); 2-hydroxy-4-n-octyloxybenzophenone (CYASORB® 531); 2-[4,6-bis(2,4-dimethylphenyl)-1,3,5-triazin-2-yl]- 5-(octyloxy)-phenol (CYASORB® 1164); 2,2'-(1,4- phenylene)bis(4H-3,1-benzoxazin-4-one) (CYASORB® UV- 3638); 1,3-bis[(2-cyano-3,3-diphenylacryloyl)oxy]-2,2-bis[[(2-cyano-3, 3-diphenylacryloyl)oxy]methyl]propane (UVINUL® 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl] propane; nano-size inorganic materials such as titanium oxide, cerium oxide, and zinc oxide, all with particle size less than 100 nanometers; or the like, or combinations comprising at least one of the foregoing UV absorbers. UV absorbers can be used in amounts of 0.0001 to 1 percent by weight, based on the total weight of thermoplastic composition.

Plasticizers, lubricants, and/or mold release agents additives may also be used. There is considerable overlap among these types of materials, which include, for example, phthalic acid esters such as dioctyl-4,5-epoxy-hexahydrophthalate; tris-(octoxycarbonylethyl)isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol-A; poly-alpha-olefins; epoxidized soybean oil; silicones, including silicone oils; esters, for example, fatty acid esters such as alkyl stearyl esters, e.g., methyl stearate; stearyl stearate, pentaerythritol tetrastearate, and the like; mixtures of methyl stearate and hydrophilic and hydrophobic nonionic surfactants comprising polyethylene glycol polymers, polypropylene glycol polymers, and copolymers thereof, e.g., methyl stearate and polyethylene-polypropylene glycol copolymers in a suitable solvent; waxes such as beeswax, montan wax, paraffin wax or the like. Such materials can be used in amounts of 0.001 to 1 percent by weight, based on the total weight of thermoplastic composition.

The thermoplastic composition can include antistatic agents. The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example Pelestat® 6321 (Sanyo) or Pebax® MH1657 (Atofina), Irgastat® P18 and P22 (Ciba-Geigy). Other polymeric materials that may be used as antistatic agents are inherently conducting polymers such as polyaniline (commercially available as PANIPOL®EB from Panipol), polypyrrole, and polythiophenes such as for example poly(3,4-ethylenedioxythiophene) (commercially available from H.C. Stark), which retain some of their intrinsic conductivity after melt processing at elevated temperatures. In one embodiment, carbon fibers, carbon nanofibers, carbon nanotubes, or any combination of the foregoing may be used in a polymeric resin containing chemical antistatic agents to render the composition electrostatically dissipative. Antistatic agents can be used in amounts of 0.0001 to 5 percent by weight, based on the total weight of thermoplastic composition.

The thermoplastic composition optionally includes a flame retardant. Flame retardant that may be added may be organic compounds that include phosphorus, bromine, and/or chlorine. Non-brominated and non-chlorinated phosphorus-containing flame retardants may be preferred in certain applications for regulatory reasons, for example organic phosphates and organic compounds containing phosphorus-nitrogen bonds.

One type of exemplary organic phosphate is an aromatic phosphate of the formula $(GO)_3P=O$, wherein each G is independently an alkyl, cycloalkyl, aryl, alkylaryl, or arylalkyl group, provided that at least one G is an aromatic group. Two of the G groups may be joined together to provide a cyclic group, for example, diphenyl pentaerythritol diphosphate. Other suitable aromatic phosphates may be, for example, phenyl bis(dodecyl) phosphate, phenyl bis (neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or polyfunctional aromatic phosphorus-containing compounds are also useful, for example, compounds of the formulas below:

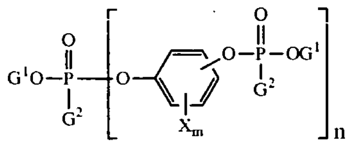

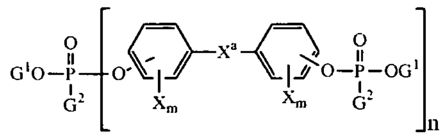

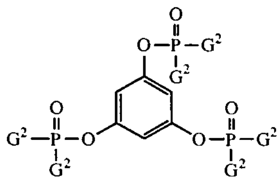

wherein each $G^1$ is independently a hydrocarbon having 1 to 30 carbon atoms; each $G^2$ is independently a hydrocarbon or hydrocarbonoxy having 1 to 30 carbon atoms; each $X^a$ is independently a hydrocarbon having 1 to 30 carbon atoms; each X is independently a bromine or chlorine; m is 0 to 4, and n is 1 to 30. Examples of suitable di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary suitable flame retardant compounds containing phosphorus-nitrogen bonds include phosphonitrilic chloride, phosphorus ester amides, phosphoric acid amides, phosphonic acid amides, phosphinic acid amides, tris (aziridinyl) phosphine oxide. When present, phosphorus-containing flame retardants can be present in amounts of 0.1 to 10 percent by weight, based on the total weight of thermoplastic composition.

Halogenated materials may also be used as flame retardants, for example halogenated compounds and resins of formula (31):

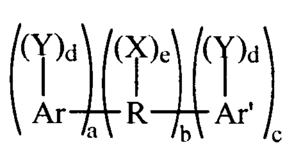

(31)

wherein R is an alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (31) are each independently mono- or polycarbocyclic aromatic groups such as phenylene, biphenylene, terphenylene, naphthylene, or the like. Also in formula (31), Y is an organic, inorganic, or organometallic radical, for example: halogen, e.g., chlorine, bromine, iodine, fluorine; ether groups of the general formula OE, wherein E is a monovalent hydrocarbon radical similar to X; monovalent hydrocarbon groups of the type represented by R; or other substituents, e.g., nitro, cyano, and the like, said substituents being essentially inert provided that there is at least one and preferably two halogen atoms per aryl nucleus.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and arylalkyl group such as benzyl, ethylphenyl, or the like; a cycloaliphatic group such as cyclopentyl,

cyclohexyl, or the like. The monovalent hydrocarbon group may itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c may be 0. Otherwise either a or c, but not both, may be 0. Where b is 0, the aromatic groups are joined by a direct carbon-carbon bond.

The hydroxyl and Y substituents on the aromatic groups, Ar and Ar', can be varied in the ortho, meta or para positions on the aromatic rings and the groups can be in any possible geometric relationship with respect to one another.

Included within the scope of the above formula are bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Also useful are oligomeric and polymeric halogenated aromatic compounds, such as a copolycarbonate of bisphenol A and tetrabromobisphenol A and a carbonate precursor, e.g., phosgene. Metal synergists, e.g., antimony oxide, may also be used with the flame retardant. When present, halogen containing flame retardants can be present in amounts of 0.1 to 10 percent by weight, based on the total weight of thermoplastic composition.

Inorganic flame retardants can also be used, for example salts of $C_{1-16}$ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate, and the like; salts formed by reacting for example an alkali metal or alkaline earth metal (for example lithium, sodium, potassium, magnesium, calcium and barium salts) and an inorganic acid complex salt, for example, an oxo-anion, such as alkali metal and alkaline-earth metal salts of carbonic acid, such as $Na_2CO_3$, $K_2CO_3$, $MgCO_3$, $CaCO_3$, and $BaCO_3$ or fluoro-anion complex such as $Li_3AlF_6$, $BaSiF_6$, $KBF_4$, $K_3AlF_6$, $KAlF_4$, $K_2SiF_6$, and/or $Na_3AlF_6$ or the like. When present, inorganic flame retardant salts are generally present in amounts of about 0.01 to about 10 parts by weight, more specifically about 0.02 to about 1 parts by weight, based on 100 parts by weight of the thermoplastic composition.

Anti-drip agents may also be used, for example a fibril forming or non-fibril forming fluoropolymer such as polytetrafluoroethylene (PTFE). The anti-drip agent may be encapsulated by a rigid copolymer as described above, for example styrene-acrylonitrile copolymer (SAN). PTFE encapsulated in SAN is known as TSAN. Encapsulated fluoropolymers may be made by polymerizing the encapsulating polymer in the presence of the fluoropolymer, for example an aqueous dispersion. TSAN may provide significant advantages over PTFE, in that TSAN may be more readily dispersed in the composition. A suitable TSAN may comprise, for example, 50 wt% PTFE and 50 wt% SAN, based on the total weight of the encapsulated fluoropolymer. The SAN may comprise, for example, 75 wt% styrene and 25 wt% acrylonitrile based on the total weight of the copolymer. Alternatively, the fluoropolymer may be pre-blended in some manner with a second polymer, such as for, example, an aromatic polycarbonate resin or SAN to form an agglomerated material for use as an anti-drip agent. Either method may be used to produce an encapsulated fluoropolymer. Antidrip agents can be used in amounts of 0.1 to 5 percent by weight, based on the total weight of thermoplastic composition.

The thermoplastic composition may further comprise an ionizing radiation stabilizing additive. Exemplary ionizing radiation stabilizing additives include certain aliphatic alcohols, aromatic alcohols, aliphatic diols, aliphatic ethers, esters, diketones, alkenes, thiols, thioethers and cyclic thioethers, sulfones, dihydroaromatics, diethers, nitrogen compounds, or a combination comprising at least one of the foregoing. Alcohol-based stabilizing additives may be selected from mono, di-, or polysubstituted alcohols, and can be straight, branched, cyclic and/or aromatic. Suitable aliphatic alcohols may include alkenols with sites of unsaturation, examples of which include 4-methyl-4-penten-2-ol, 3-methyl-pentene-3-ol, 2-methyl-4-penten-2-ol, 2,4-dimethyl-4-penten-2-ol, 2-phenyl-4-penten-2-ol, and 9-decen-1-ol; tertiary alcohols including 3-hydroxy-3-methyl-2-butanone, 2-phenyl-2-butanol, and the like; hydroxy-substituted tertiary cycloaliphatics such as 1-hydroxy-1-methyl-cyclohexane; and hydroxymethyl aromatics having an aromatic ring with carbinol substituents such as a methylol group ($-CH_2OH$) or a more complex hydrocarbon group such as (-CRHOH) or ($-CR_2OH$), wherein R is straight chain $C_1$-$C_{20}$ alkyl or branched $C_1$-$C_{20}$ alkyl. Exemplary hydroxy carbinol aromatics include benzhydrol, 2-phenyl-2-butanol, 1,3-benzenedimethanol, benzyl alcohol, 4-benzyloxy-benzyl alcohol, and 4-benzyl-benzyl alcohol.

Useful classes of ionizing radiation stabilizing additives are di- and polyfunctional aliphatic alcohols, also referred to as aliphatic diols and aliphatic polyols. Specifically useful are aliphatic diols of formula (32):

$$HO\text{-}(C(A')(A''))_d\text{-}S\text{-}(C(B')(B''))_e\text{-}OH \qquad (32)$$

wherein A', A", B', and B" are each independently H or $C_1$-$C_6$ alkyl; S is $C_1$-$C_{20}$ alkyl, $C_2$-$C_{20}$ alkyleneoxy, $C_3$-$C_6$ cycloalkyl, or $C_3$-$C_6$ substituted cycloalkyl; and d and e are each 0 or 1, with the proviso that, when d and e are each 0, S is selected such that both -OH groups are not connected directly to a single common carbon atom.

In formula (32), A', A", B', and B" can each be independently selected from H, methyl, ethyl, n-propyl, isopropyl, n-butyl, sec-butyl, t-butyl, n-pentyl, 2-pentyl, 3-pentyl, isopentyl, neopentyl, n-hexyl, 2-hexyl, 3-hexyl, 2-methyl pentyl, 3-methylpentyl, 2,2-dimethylbutyl, 2,3-dimethylbutyl, and the like, and a combination comprising at least one of the foregoing alkyl groups.

Spacer group S can be selected from methanediyl, ethanediyl, 1,1-ethanediyl, 1,1-propanediyl, 1,2-propanediyl, 1,3-propanediyl, 2,2-propanediyl, 1,1-butanediyl, 1,2-butanediyl, 1,3-butanediyl, 1,4-butanediyl, 2,2-butanediyl, 2,3-butanediyl, 1,1-pentanediyl, 1,2-pentanediyl, 1,3-pentanediyl, 1,4- pentanediyl, 1,5-pentanediyl, 2,2- pentanediyl, 2,3- pentanediyl, 2,4- pentanediyl, 3,3- pentanediyl, 2-methyl-1,1-butanediyl, 3-methyl-1,1-butanediyl, 2-methyl-1,2-butanediyl, 2-methyl-1,3-butanediyl, 2-methyl-1,4-butanediyl, 2-methyl-2,2-butanediyl, 2-methyl-2,3-butanediyl, 2,2-dimethyl-1,1-propanediyl, 2,2-dimethyl-1,2-propanediyl, 2,2-dimethyl-1,3-propanediyl, 3,3-dimethyl-1,1-propanediyl, 3,3-dimethyl-1,2-propanediyl, 3,3-dimethyl-2,2-propanediyl, 1,1-dimethyl-2,3-propanediyl, 3,3-dimethyl-2,2-propanediyl, 1,1-hexanediyl, 1,2- hexanediyl, 1,3- hexanediyl, 1,4-hexanediyl, 1,5- hexanediyl, 1,6- hexanediyl, 2,2- hexanediyl, 2,3- hexanediyl, 2,4-hexanediyl, 2,5- hexanediyl, 3,3- hexanediyl, 2-methyl-1,1-pentanediyl, 3-methyl-1,1-pentanediyl, 2-methyl-1,2-pentanediyl, 2-methyl-1,3-pentanediyl, 2-methyl-1,4-pentanediyl, 2-methyl-2,2-pentanediyl, 2-methyl-2,3-pentanediyl, 2-methyl-2,4-pentanediyl, 2,2-dimethyl-1,1-butanediyl, 2,2-dimethyl-1,2-butanediyl, 2,2-dimethyl-1,3-butanediyl, 3,3-dimethyl-1,1-butanediyl, 3,3-dimethyl-1,2-butanediyl, 3,3-dimethyl-2,2-butanediyl, 1,1-dimethyl-2,3-butanediyl, 3,3-dimethyl-2,2-butanediyl, and the like; isomers of octanediyl, decanediyl, undecanediyl, dodecanediyl, hexadecanediyl, octadecanediyl, icosananediyl, and docosananediyl; and substituted and unsubstituted cyclopropanediyl, cyclobutanediyl, cyclopentanediyl, cyclohexanediyl, wherein substituents may be the points of radical attachment, such as in 1,4-dimethylenecyclohexane, or may include branched and straight chain alkyl, cycloalkyl, and the like. Additionally, the spacer group S may be selected from one or more diradicals comprising polyalkyleneoxy units, such as ethyleneoxy, 1,2-propyleneoxy, 1,3-propyleneoxy, 1,2-butyleneoxy, 1,4-butyleneoxy, 1,6-hexyleneoxy, and the like; and a combination comprising at least one of these.

Specific examples of suitable aliphatic diols include ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; alicyclic alcohols such as 1,3-cyclobutanediol, 2,2,4,4-tetramethylcyclobutanediol, 1,2-cyclopentanediol, 1,2-cyclohexanediol, 1,3-cyclohexanediol, 1,4-cyclohexanediol, 1,4-dimethylolcyclohexane, and the like; branched acyclic diols such as 2,3-dimethyl-2,3-butanediol (pinacol), and 2-methyl-2,4-pentanediol (hexylene glycol); and polyalkyleneoxy-containing alcohols such as polyethylene glycol, polypropylene glycol, block or random poly(ethyleneglycol-co-propyleneglycols), and diols of copolymers containing polyalkyleneoxy-groups. Useful polyols may include polyaryleneoxy compounds such as polyhydroxystyrene; alkyl polyols such as polyvinylalcohol, polysaccharides, and esterified polysaccharides. A combination comprising at least one of the foregoing may also be useful. Specifically suitable diols include 2-methyl-2,4-pentanediol (hexylene glycol), polyethylene glycol, and polypropylene glycol.

Suitable aliphatic ethers may include alkoxy-substituted cyclic or acyclic alkanes such as, for example, 1,2-dialkoxyethanes, 1,2-dialkoxypropanes, 1,3-dialkoxypropanes, alkoxycyclopentanes, alkoxycyclohexanes, and the like. Ester compounds (-COOR) may be useful as stabilizers wherein R may be a substituted or unsubstituted, aromatic or aliphatic, hydrocarbon and the parent carboxy compound may likewise be substituted or unsubstituted, aromatic or aliphatic, and/or mono- or polyfunctional. When present, substituents may include, for example, $C_1$-$C_8$ alkyl, $C_1$-$C_8$ alkyl ether, $C_6$-$C_{20}$ aryl, and the like. Esters which have proven useful include tetrakis(methylene [3,5-di-t-butyl-4-hydroxy-hydrocinnamate])methane, 2,2'-oxamido bis(ethyl-3-(3,5-di-t-butyl-4-hydroxyphenyl) propionate, and trifunctional hindered phenolic ester compounds such as GOOD-RITE® 3125, available from B.F. Goodrich in Cleveland OH.

Diketone compounds may also be used, specifically those having two carbonyl functional groups and separated by a single intervening carbon atoms such as, for example 2,4-pentadione.

Sulfur-containing compounds, suitable for use as stabilizing additives, can include thiols, thioethers and cyclic thioethers. Thiols include, for example, 2-mercaptobenzothiazole; thioethers include dilaurylthiopropionate; and cyclic thioethers include 1,4-dithiane, 1,4,8,11-tetrathiocyclotetradecane. Cyclic thioethers containing more than one thioether group are useful, specifically those having a single intervening carbon between two thioether groups such as in, for example, 1,3-dithiane. The cyclic ring may contain oxygen or nitrogen members.

Aryl or alkyl sulfone stabilizing additives of general structure R-$S(O)_2$-R' may also be used, where R and R' comprise $C_1$-$C_{20}$ alkyl, $C_6$-$C_{20}$ aryl, $C_1$-$C_{20}$ alkoxy, $C_6$-$C_{20}$ aryloxy, substituted derivatives thereof, and the like, and wherein at least one of R or R' is a substituted or unsubstituted benzyl. When present, substituents may include, for example, $C_1$-$C_8$ alkyl, $C_1$-$C_8$ alkyl ether, $C_6$-$C_{20}$ aryl, and the like. An example of a specifically useful sulfone is benzylsulfone.

Alkenes may be used as stabilizing additives. Suitable alkenes may include olefins of general structure RR'C=CR"R"' wherein R, R', R", and R"' may each individually be the same or different and may be selected from hydrogen, $C_1$-$C_{20}$ alkyl, $C_1$-$C_{20}$ cycloalkyl, $C_1$-$C_{20}$ alkenyl, $C_1$-$C_{20}$ cycloalkenyl, $C_6$-$C_{20}$ aryl, $C_6$-$C_{20}$ arylalkyl, $C_6$-$C_{20}$ alkylaryl, $C_1$-$C_{20}$ alkoxy, $C_6$-$C_{20}$ aryloxy and substituted derivatives thereof. When present, substituents may include, for example, $C_1$-$C_8$ alkyl, $C_1$-$C_8$ alkyl ether, $C_6$-$C_{20}$ aryl, and the like. The olefins may be acyclic, exocyclic, or endocyclic. Examples of specifically useful alkenes include 1,2-diphenyl ethane, allyl phenol, 2,4-dimethyl-1-pentene, limonene, 2-phenyl-2-pentene, 2,4-dimethyl-1-pentene, 1,4-diphenyl-1,3-butadiene, 2-methyl-1-undecene, 1-dodecene, and the like, or a combination comprising at least one of the foregoing.

Hydroaromatic compounds may also be useful as stabilizing additives, including partially hydrogenated aromatics, and aromatics in combination with an unsaturated ring. Specific aromatics include benzene and/or naphthalene based systems. Examples of suitable hydroaromatic compounds include indane, 5,6,7,8-tetrahydro-1-naphthol, 5,6,7,8-tetrahydro-2-naphthol, 9,10-dihydro anthracene, 9,10-dihydrophenanthrene, 1-phenyl-1-cyclohexane, 1,2,3,4-tetrahydro-1-naphthol, and the like, or a combination comprising at least one of the foregoing.

Diethers, including hydrogenated and nonhydrogenated, and substituted and unsubstituted pyrans, may also be used as stabilizing additives. When present, substituents may include $C_1$-$C_8$ alkyl, $C_1$-$C_8$ alkyl ether, or $C_6$-$C_{20}$ aryl. The pyrans may have substituents including $C_1$-$C_{20}$ alkyl, $C_6$-$C_{20}$ aryl, $C_1$-$C_{20}$ alkoxy, or $C_6$-$C_{20}$ aryloxy, and which may be positioned on any carbon of the pyran ring. Specifically useful substituent groups include $C_1$-$C_{20}$ alkoxy or $C_6$-$C_{20}$ aryloxy, located on the ring at the six position. Hydrogenated pyrans are specifically useful. Examples of suitable diethers include dihydropyranyl ethers and tetrahydropyranyl ethers.

Nitrogen compounds which may function as stabilizers include high molecular weight oxamide phenolics, for example, 2,2-oxamido bis-[ethyl 3-(3,5-di-tert-butyl-4-hydroxyphenyl)propionate], high molecular weight oxalic anilides and their derivatives, and amine compounds such as thiourea.

Ionizing radiation stabilizing additives are typically used in amounts of 0.001 to 1 wt%, specifically 0.005 to 0.75 wt%, more specifically 0.01 to 0.5 wt%, and still more specifically 0.05 to 0.25 wt%, based on the total weight of thermoplastic composition. In an embodiment, a specifically suitable ionizing radiation stabilizing additive is an aliphatic diol.

The thermoplastic composition may be manufactured by methods generally available in the art, for example, in one embodiment, in one manner of proceeding, powdered polycarbonate, polycarbonate-polysiloxane copolymer, dye(s) and other optional components are first blended, in a HENSCHEL-Mixer® high speed mixer. Other low shear processes including but not limited to hand mixing may also accomplish this blending. The blend is then fed into the throat of an extruder via a hopper. Alternatively, one or more of the components may be incorporated into the composition by feeding directly into the extruder at the throat and/or downstream through a sidestuffer. Additives may also be compounded into a masterbatch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate may be one-fourth inch long or less as desired. Such pellets may be used for subsequent molding, shaping, or forming.

In a specific embodiment, the extruder is a twin-screw extruder. The extruder is typically operated at a temperature of 180 to 385°C, specifically 200 to 330°C, more specifically 220 to 300°C, wherein the die temperature may be different. The extruded thermoplastic composition is quenched in water and pelletized.

Shaped, formed, or molded articles comprising the thermoplastic compositions are also provided. The thermoplastic compositions may be molded into useful shaped articles by a variety of means such as injection molding, extrusion, rotational molding, blow molding and thermoforming. In a specific embodiment, molding is done by injection molding. Desirably, the thermoplastic composition has excellent mold filling capability.

The thermoplastic composition is useful to form an article such as, for example, an infrared-transparent window or infrared transparent housing for use in a small, portable electronic device. The article is optionally laser welded to another article or component. The electronic device may have an infrared transmitter, infrared receiver, or both an infrared transmitter and infrared receiver located inside the electronic device. The article prepared using the thermoplastic composition, e.g., window, may not be perceptible in the electronic device. As used herein, "not perceptible" means not observed upon viewing the electronic device, through 1mm thick part, using the naked eye at a distance of greater than or equal to 30 centimeters under natural daylight conditions. Exemplary electronic devices that may incorporate an article formed using the thermoplastic composition include, but are not limited to, battery chargers and adaptors, calculators, remote controls, multi-functional cellular telephones, personal digital assistants (PDAs), laptop computers, wireless mouses, computer keyboards, on-board navigation devices for automobiles or other vehicles, lavatory sensors, security sensors, and the like. The same base matrix material can be used for parts that are laser transparent as well as those that are laser absorbent simply by changing the color package in the part.

The thermoplastic composition is further illustrated by the following non-limiting examples.

Melt Volume Rate (MVR) was determined at 260°C using a 5-kilogram weight, over 10 minutes, in accordance with ISO 1133.

Notched Izod Impact Strength ('NII') is used to compare the impact resistances of plastic materials at different temperatures according to ISO 180. Izod Impact was determined using a 4 mm thick, molded (NII) bar. It was determined per ISO 180/1A. The ISO designation reflects type of specimen and type of notch: ISO 180/1A means specimen type 1 and notch type A. ISO 180/1U means the same type 1 specimen, but clamped in a reversed way, (indicating unnotched). The ISO results are defined as the impact energy in joules used to break the test specimen, divided by the specimen area at the notch. Results are reported in $kJ/m^2$.

Percent ductility was determined on 4 mm thick NII test bars at room temperature using the impact energy as well as stress whitening of the fracture surface. Generally, significant stress whitening of the fractured surface accompanied by gross deformation at the fractured tip can indicate ductile failure mode; conversely, lack of significant stress whitening of the fractured surface accompanied by gross deformation at the fractured tip can indicate brittle failure mode. Ten bars were tested, and percent ductility is expressed as a percentage of impact bars that exhibited ductile failure mode. Ductility tends to decrease with temperature, and the ductile-brittle transition temperature is the temperature at which the possibility of ductile failure is equal to the possibility of brittle failure (that is, % ductility equals 50%).

Vicat Softening Temperature (VST, measured according to ISO 306) is a measure of the temperature at which a plastic starts to soften rapidly. A round, flat-ended needle of 1 $mm^2$ cross section penetrates the surface of a plastic test specimen under a predefined load, and the temperature is raised at a uniform rate. The Vicat softening temperature, or VST, is the temperature at which the penetration reaches 1 mm. ISO 306 describes two methods: Method A - load of 10 Newtons (N), and Method B - load of 50 N, with two possible rates of temperature rise: 50°C/hour (°C/h) or 120°C/h. This results in ISO values quoted as A/50, A/120, B/50 or B/120. The test assembly is immersed in a heating bath with a starting temperature of 23°C. After 5 minutes (min) the load is applied: 10 N or 50 N. The temperature of the bath at which the indenting tip has penetrated by 1 $\pm$ 0.01 mm is reported as the VST of the material at the chosen load and temperature rise. The samples in these experiments were measured under condition B/120.

Melt Viscosity was measured in a capillary rheometer at 1500 1/sec at 280°C according to ISO 11443.

Transmission was measured using a Hitachi U-3410 spectrophotometer in transmission mode on 1 millimeter thick molded plaques having a smooth surface. The machine is internally calibrated via a dual beam. Before measuring a test sample, a baseline was measured without any sample in the measurement position.

Goniospectrophotometer flop was measured by using a Gretag Macbeth CE-740GL goniospectrophotometer. Square sample plaques 1 mm thick were injection molded using a mold with a film gate extending the length of one edge. Both large surfaces of the molded plaques were smooth. Measurements were taken in the centre of the plaques and with the film gate facing the right hand side if one was facing the measurement aperture. The measurements were taken under D65 illuminant and at measurement angles of 15° and 110°. The plaques are measured 3 times and the average taken. The dE between the 15° angle and 110° angle is calculated using CIELAB 1976 equation:

$$dE = ((L^*_{15^\circ}-L^*_{110^\circ})^2 + (a^*_{15^\circ}-a^*_{110^\circ})^2 + (b^*_{15^\circ}-b^*_{110^\circ})^2 )^{0.5}.$$

Average size of the siloxane domains was determined as follows. Three TEM pictures were taken of each sample, and the longest axis of twenty (20) domains was measured on each TEM picture. The average of the sixty (60) domains was calculated.

The lightness L* was measured using a Gretag Macbeth ColorEye7000 spectrophotometer according to DIN5033 part 3 CIE 1976 using a D65 illuminant. All plaques were measured on the same location and with the same orientation.

Flammability tests were performed following the procedure of Underwriter's Laboratory Bulletin 94 entitled "Tests for Flammability of Plastic Materials, UL94." According to this procedure, materials may be classified as HB, V0, V1, V2, 5VA and/or 5VB on the basis of the test results obtained for five samples at the specified sample thicknesses. The criteria for each of these flammability classifications are described below.

V0: In a sample placed so that its long axis is 180 degrees to the flame, the average period of flaming and/or smoldering after removing the igniting flame does not exceed five seconds and none of the vertically placed samples produces drips of burning particles that ignite absorbent cotton, and no specimen burns up to the holding clamp after flame or after glow. Five bar flame out time (FOT) is the sum of the flame out time for five bars, each lit twice for a maximum flame out time of 50 seconds. FOT1 is the average flame out time after the first light. FOT2 is the average flame out time after the second light.

V1, V2, FOT: In a sample placed so that its long axis is 180 degrees to the flame, the average period of flaming and/or smoldering after removing the igniting flame does not exceed twenty-five seconds and, for a V1 rating, none of the vertically placed samples produces drips of burning particles that ignite absorbent cotton. The V2 standard is the same as V1, except that drips are permitted. Five bar flame out time (FOT) is the sum of the flame out time for five bars, each lit twice for a maximum flame out time of 250 seconds.

5VB: a flame is applied to a vertically fastened, 5-inch (127 mm) by 0.5-inch (12.7 mm) test bar of a given thickness above a dry, absorbent cotton pad located 12 inches (305 mm) below the bar. The thickness of the test bar is determined using calipers with 0.1 mm accuracy. The flame is a 5-inch (127 mm) flame with an inner blue cone of 1.58 inches (40 mm). The flame is applied to the test bar for 5 seconds so that the tip of the blue cone touches the lower corner of the specimen. The flame is then removed for 5 seconds. Application and removal of the flame is repeated for until the specimen has had five applications of the same flame. After the fifth application of the flame is removed, a timer (T-0) is started and the time that the specimen continues to flame (after-flame time), as well as any time the specimen continues to glow after the after-flame goes out (after-glow time), is measured by stopping T-0 when the after-flame stops, unless there is an after-glow and then T-0 is stopped when the after-glow stops. The combined after-flame and after-glow time must be less than or equal to 60 seconds after five applications of a flame to a test bar, and there may be no drips that ignite the cotton pad. The test is repeated on 5 identical bar specimens. If there is a single specimen of the five that does not comply with the time and/or no-drip requirements then a second set of 5 specimens are tested in the same fashion. All of the specimens in the second set of 5 specimens must comply with the requirements in order for material in the given thickness to achieve the 5VB standard.

The data was also analyzed by calculating the average flame out time, standard deviation of the flame out time and the total number of drips, and by using statistical methods to convert that data to a prediction of the probability of first time pass, or "p(FTP)", that a particular sample formulation would achieve a "pass" rating in the conventional UL94 V0 or V1 testing of 5 bars. The probability of a first time pass on a first submission (pFTP) may be determined according to the formula:

$$pFTP = (P_{t1>mbt,\ n=0} \times P_{t2>mbt,\ n=0} \times P_{total<=mtbt} \times P_{drip,\ n=0})$$

where $P_{t1>mbt,\ n=0}$ is the probability that no first bum time exceeds a maximum burn time value, $P_{t2>mbt,\ n=0}$ is the probability that no second bum time exceeds a maximum burn time value, $P_{total<=mtbt}$ is the probability that the sum of the bum times is less than or equal to a maximum total bum time value, and $P_{drip,\ n=0}$ is the probability that no specimen exhibits dripping during the flame test. First and second burn time refer to burn times after a first and second application of the flame, respectively.

The probability that no first bum time exceeds a maximum burn time value, $P_{t1>mbt,\ n=0}$, may be determined from the formula

$$P_{t1>mbt,\ n=0} = (1-P_{t1>mbt})^5$$

where $P_{t1>mbt}$ is the area under the log normal distribution curve for t1>mbt, and where the exponent "5" relates to the number of bars tested.

The probability that no second bum time exceeds a maximum bum time value may be determined from the formula:

$$P_{t2>mbt,\ n=0} = (1-P_{t2>mbt})$$

where $P_{t2>mbt}$ is the area under the normal distribution curve for t2>mbt. As above, the mean and standard deviation of the burn time data set are used to calculate the normal distribution curve. For the UL94 V0 rating, the maximum burn time is 10 seconds. For a V 1 or V2 rating the maximum burn time is 30 seconds[5].

The probability $P_{drip,\ n=0}$ that no specimen exhibits dripping during the flame test is an attribute function, estimated by:

$$(1-P_{drip})^5$$

where $P_{drip}$ =(the number of bars that drip/the number of bars tested).

The probability $P_{total<=mtbt}$ that the sum of the burn times is less than or equal to a maximum total burn time value may be determined from a normal distribution curve of simulated 5-bar total bum times. The distribution may be generated from a Monte Carlo simulation of 1000 sets of five bars using the distribution for the burn time data determined above. Techniques for Monte Carlo simulation are well known in the art. A normal distribution curve for 5-bar total bum times may be generated using the mean and standard deviation of the simulated 1000 sets. Therefore, $P_{total<=mtbt}$ may be determined from the area under a log normal distribution curve of a set of 1000 Monte Carlo simulated 5-bar total bum time for total<=maximum total bum time. For the UL94 V0 rating, the maximum total burn time is 50 seconds. For a V1 or V2 rating, the maximum total bum time is 250 seconds.

Preferably, p(FTP) is as close to 1 as possible, for example, greater than or equal to about 0.7, optionally greater than or equal to about 0.85, optionally greater than or equal to about 0.9 or, more specifically, greater than or equal to about 0.95, for maximum flame-retardant performance in UL testing. The p(FTP) ≥ 0.7, and specifically, p(FTP) ≥ 0.85, is a more stringent standard than merely specifying compliance with the referenced V0 or V1 test.

Time to drip (TTD): The time to drip is determined by alternately applying and removing a flame as described for the 5VB test in consecutive 5-second intervals, until the first drip of material falls from the bar. A time to drip characteristic of 55 seconds (s) or greater has been found to correlate well with other desired characteristics such as 5VB ratings.

The thermoplastic compositions in Table 2 below were compounded on a Toshiba twin screw extruder at a nominal melt temperature of 270°C and at a rate of 350 rpm. The twin-screw extruder had enough distributive and dispersive mixing elements to produce good mixing of the polymer compositions. The extrudate was pelletized and dried at about 100°C for about 4 hours. Compositions were compounded and molded at a temperature of 270°C, though it will be recognized by one skilled in the art that the method is not limited to these temperatures.

To make test specimens, the dried pellets were injection molded on a Van Dorn 85-ton injection molding machine at a nominal temperature of 245°C to form specimens for most of the tests below. Test bars for flame testing were injection molded at a nominal temperature of 245°C on a Husky injection molding machine. Specimens were tested in accordance with ASTM or ISO standards as described above. The following components were used:

Table 1.

| Component | Material | Supplier |
|---|---|---|
| PC-1 | BPA polycarbonate resin made by a melt process with MW 22 kg/mol measured on a PC standard basis (MVR at 300°C/1.2kg, of 23.5-28.5 g/10 min) | GE Plastics |
| PC-2 | BPA polycarbonate resin made by a melt process with MW 30 kg/mol measured on a PC standard basis (MVR at 300°C/1.2kg, of 5.1-6.9 g/10 min) | GE Plastics |
| PC-3 | BPA polycarbonate resin made by the interfacial process with an MVR at 300°C/1.2kg, of 23.5-28.5 g/10 min | GE Plastics |
| PC-Si-1 | Polysiloxane-polycarbonate copolymer (opaque) comprising units derived from BPA and polysiloxane having an absolute weight average molecular weight of about 30000 g/mol, and a dimethylsiloxane content of about 20 wt.% | GE Plastics |
| PC-Si-2 | Transparent Polysiloxane-polycarbonate copolymer comprising units derived from BPA and polysiloxane having an absolute weight average molecular weight of about 23,500 g/mol, and a dimethylsiloxane content of about 6% | GE Plastics |
| SAN | Styrene acrylonitrile comprising 23.5-26.5 wt.% acrylonitrile and 73.5-76.5 wt.% styrene | GE Plastics |
| ABS | ABS comprising about 52 wt.% polybutadiene, and 48 wt.% SAN (12 wt.% acrylonitrile and 36 wt.% styrene) | GE Plastics |
| BABS | Bulk ABS comprising about 16-17 wt.% polybutadiene and 83-84 wt.% SAN (about 15 wt.% acrylonitrile and 69 wt.% styrene) | GE Plastics |
| BPADP | Bisphenol A bis(diphenylphosphate) | GE Plastics |
| TSAN | PTFE encapsulated in SAN (50 wt.% PTFE, 50 wt.% SAN) | GE Plastics |

(continued)

| Component | Material | Supplier |
|---|---|---|
| Silicone-1 | Phenylmethyl polysiloxane | GE Silicones |
| Silicone-2 | Polydimethylsiloxane with vinyl groups, filler and auxiliaries (GENIOPLAST® PELLET S) | Wacker-Chemie Gmbh |
| SY163 | Solvent Yellow 163 (Oracet Yellow GHS) | CIBA Specialty Chemicals |
| SB97 | Solvent Blue 97 (Macrolex Blue RR) | LANXESS |
| SG3 | Solvent Green 3 (Macrolex Green 5B) | LANXESS |
| SR135 | Solvent Red 135 (Macrolex Red EG) | LANXESS |
| SR52 | Solvent Red 52 (Macrolex Red 5B) | LANXESS |
| SV36 | Solvent Violet 36 (Macrolex Violet SR) | LANXESS |
| PB7 | Pigment Black 7 (Monarch 800) | Degussa |

The polysiloxane-polycarbonate copolymers were made using a process as described in US Publication No. 2005/0187372 (paragraphs [0043] to [0046]), which is as follows. The first polysiloxane-polycarbonate copolymer (PC-Si-1) can be produced by blending BPA with an organic solvent and an effective amount of phase transfer catalyst or an aliphatic tertiary amine, such as triethylamine, under interfacial conditions. Sufficient alkali metal hydroxide can be utilized to raise the pH of the bisphenol reaction mixture prior to phosgenation, to a value of about 10.5. This can result in the dissolution of some of the bisphenol into the aqueous phase. Suitable organic solvents, which can be used, are, for example, chlorinated aliphatic hydrocarbons, such as methylene chloride, chloroform, carbon tetrachloride, dichloroethane, trichloroethane, tetrachloroethane, dichloropropane and 1,2-dichloroethylene; substituted aromatic hydrocarbons such as, chlorobenzene, o-dichlorobenzene, and the various chlorotoluenes. The chlorinated aliphatic hydrocarbons, especially methylene chloride, are preferred. Aqueous alkali, or alkaline earth metal hydroxide addition can be used to maintain the pH of the phosgenation mixture near the pH set point, which may be in the range of between about 10 to about 12. Some of the alkali metal or alkaline earth metal hydroxides, which can be employed, are for example, sodium hydroxide, potassium hydroxide, and calcium hydroxide. Sodium and potassium hydroxides, and particularly sodium hydroxide are preferred. During the course of phosgene introduction at a pH of from about 10 to about 12, and depending upon the rate of phosgene addition, the pH can be lowered to allow for the introduction of the hydroxyaryl-terminated poly(diorganosiloxane). End-capping agents such as phenol, p-butylphenol, p-cumyl phenol, octylphenol, nonylphenol and other monohydroxyaromatic compounds may be used to regulate the molecular weight or to terminate the reaction.

The second polysiloxane-polycarbonate copolymer (PC-Si-2) can be produced by phosgenating an aromatic dihydroxy compound in the presence of a phase transfer catalyst at a pH of about 5 to about 8 to form bischloroformate oligomers. To this is added a hydroxyaryl-4-terminated poly(diorganosiloxane) which is allowed to react at a pH of about 9 to about 12 for a period of time sufficient to effect the reaction between the bischloroformate oligomers and the hydroxyaryl-terminated poly(diorganosiloxane), typically a time period of about 10 to about 45 minutes. Preferably there is a large molar excess of chloroformate groups relative to hydroxyaryl groups. The remaining aromatic dihydroxy compound is then added, and the disappearance of chloroformates is monitored, usually by phosgene paper. When substantially all chloroformates have reacted, an end-capping agent and optionally a trialkylamine are added and the reaction phosgenated to completion at a pH of 9 to 12.

Sample compositions were produced using the materials in Table 1 according to the methods described above and tested according to the test methods previously described. The sample formulations and amounts used and test results are shown in Tables 2 and 3 below.

Table 2

| | Unit | #1[c] | #2 | #3 | #4 | #5 | #6 | #7 | #8 | #9[c] | #10[c] |
|---|---|---|---|---|---|---|---|---|---|---|---|
| PC-1 | % | 37.8 | 34.8 | 31.8 | 25.8 | 19.8 | 28.8 | 20.8 | 31.8 | 37.8 | 37.8 |
| PC-2 | % | 45.34 | 42.34 | 39.34 | 33.34 | 27.34 | 36.34 | 28.34 | 39.34 | 45.34 | 45.34 |
| PC-3 | % | 0 | 0 | 0 | 0 | 0 | 0 | 0 | 0 | 10 | 10 |
| SAN | % | 2 | 2 | 2 | 2 | 2 | 2 | 2 | 2 | 2 | 2 |

(continued)

| | Unit | #1[c] | #2 | #3 | #4 | #5 | #6 | #7 | #8 | #9[c] | #10[c] |
|---|---|---|---|---|---|---|---|---|---|---|---|
| PC-Si-1 | % | 12 | 6 | 6 | 6 | 6 | 4 | 4 | 8 | 0 | 0 |
| PC-Si-2 | % | 0 | 12 | 18 | 30 | 42 | 26 | 42 | 16 | 0 | 0 |
| Total Siloxane in Comp.** | % | 2.4 | 1.92 | 2.28 | 3 | 3.72 | 2.36 | 3.32 | 2.56 | 0 | 0 |
| BPADP | % | 2 | 2 | 2 | 2 | 2 | 2 | 2 | 2 | 2 | 2 |
| TSAN | % | 0.4 | 0.4 | 0.4 | 0.4 | 0.4 | 0.4 | 0.4 | 0.4 | 0.4 | 0.4 |
| OTHERS* | % | 0.46 | 0.46 | 0.46 | 0.46 | 0.46 | 0.46 | 0.46 | 0.46 | 0.46 | 0.46 |
| Silicone-1 | % | 0 | 0 | 0 | 0 | 0 | 0 | 0 | 0 | 2 | 0 |
| Silicone-2 | % | 0 | 0 | 0 | 0 | 0 | 0 | 0 | 0 | 0 | 2 |
| SR135 | % | 0.125 | 0.125 | 0.125 | 0.125 | 0.125 | 0.125 | 0.125 | 0.125 | 0.125 | 0.125 |
| SG3 | % | 0.125 | 0.125 | 0.125 | 0.125 | 0.125 | 0.125 | 0.125 | 0.125 | 0.125 | 0.125 |

[c] - comparative example.
OTHERS* - standard additives, including hindered phenol antioxidant (0.08 wt%), phosphite stabilizer (0.08 wt%) and pentaerythritol tetrastearate (0.3 wt%) were also added to the compositions.
** This is the total amount of siloxane in the sample, based on the total weight of the composition.

Table 3

| PHYSICAL PROPERTIES | Units | #1[c] | #2 | #3 | #4 | #5 | #6 | #7 | #8 | #9[c] | #10[c] |
|---|---|---|---|---|---|---|---|---|---|---|---|
| MVR 260°C/5kg | $cm^3$/10 min | 18.0 | 17.4 | 16.5 | 16.6 | 17.1 | 17.2 | 18.9 | 17.2 | 23.5 | 31.3 |
| Ductility | % | 100 | 60 | 20 | 100 | 100 | 80 | 100 | 100 | 0 | 0 |
| NII, 23°C | $kJ/m^2$ | 43.82 | 17.11 | 19.38 | 51.44 | 42.88 | 36.71 | 47.69 | 50.96 | 8.73 | 7.48 |
| Vicat B/120 | °C | 127 | 134 | 134 | 133 | 132 | 134 | 133 | 134 | 135 | 127 |
| Melt Viscosity at 1500 1/sec | Pa·s | 233 | 276 | 272 | 265 | 252 | 270 | 248 | 272 | 203 | 174 |
| UL94 V0 1.5mm, FOT2 avg | sec | 2.1 | 2.5 | 2.3 | 2.3 | 2.1 | 2.2 | 2.1 | 1.8 | 19.2 | 13.9 |
| UL94 V0 1.5mm, p(FTP) | -- | 0.99 | 0.98 | 1.00 | 1.00 | 0.98 | 0.97 | 1.00 | 1.00 | 0.00 | 0.00 |
| Lightness (L*) | CIELAB | 28.0 | 27.7 | 27.7 | 27.6 | 27.3 | 27.4 | 27.4 | 28.0 | 32.9 | 27.8 |
| % Transmission (Laser Transparence by UV-Vis) | wave length | | | | | | | | | | |
| | 800 nm | 63.0 | 77.9 | 65.7 | 79.0 | 80.3 | 80.0 | 80.0 | 77.0 | 47.9 | 76.9 |
| | 810 nm | 63.8 | 78.2 | 66.1 | 79.4 | 80.7 | 80.3 | 80.3 | 77.4 | 48.3 | 77.2 |
| | 1060 nm | 75.6 | 84.4 | 74.0 | 85.1 | 86.0 | 85.6 | 85.6 | 84.1 | 56.0 | 81.8 |
| | 1070 nm | 75.9 | 84.5 | 74.3 | 85.3 | 86.2 | 85.7 | 85.7 | 84.2 | 56.1 | 81.9 |
| dE flop (dE 15° vs 110°) | dE | 9.27 | 5.69 | 4.34 | 4.85 | 2.97 | 2.75 | 2.89 | 5.46 | 30.71 | 5.15 |
| Average Domain Size* | nm | 55 | 45 | 36 | 29 | 32 | 32 | 21 | 38 | >100 | >100 |

[c] - comparative example.

The domain size in Examples 9 and 10 were very large (over 100 nm) and it was not possible to measure 20 domains in one TEM as measured for the remainder of the samples.

Table 3 shows that the compositions having a blend of the polycarbonate-polysiloxane copolymers have improved laser transparency and dE flop compared to the samples without the polycarbonate-polysiloxane copolymers. Example 1 is a control sample (a commercial grade material) having only the opaque polycarbonate-polysiloxane material. All of the physical properties are good except for the dE flop, which is significantly higher than Examples 2 to 8. Examples 9 and 10 are comparative samples using silicone additives instead of the polycarbonate-polysiloxane copolymers. The dE flop of Examples 9 and 10 is also significantly higher than that of Examples 2 to 8. The Examples also show that the use of the polycarbonate-polysiloxane copolymers wherein the siloxane domains in the composition have an average domain size of between 15 and 45 nanometers to produce a composition can produce compositions having excellent dE flop and transmission.

All of the compositions in Table 2 have SAN and a flame retardant (FR) additive. Both of these materials are known to adversely affect impact performance, therefore, additional amounts of the polycarbonate-polysiloxane may be necessary to achieve a certain desired impact level. For example, compare Examples 2, 3, 4 and 5, which have 6 wt. % of PC-Si-1 and 12, 18, 24 and 36 wt.% of PC-Si-2, respectively. As the total PC-Si content (and the amount of PC-Si-2) increases, the notched Izod impact also increases.

Additional sample compositions were produced using the materials listed in Table 1. The materials were compounded on a Werner & Pfleiderer ZSK 25 extruder at a nominal melt temperature of 300°C and at a rate of 300 rpm. The extruder had enough distributive and dispersive mixing elements to produce good mixing of the polymer compositions. The extrudate was pelletized and dried at about 120°C for about 2 hours. Compositions were compounded and molded on an Engel ES 200/75HL at a temperature of 300°C, though it will be recognized by one skilled in the art that the method is not limited to these temperatures. The sample formulations and amounts used are shown in Table 4 and the test results are shown in Table 5 below.

Table 4

| COMP | Unit | #11[c] | #12 | #13 | #14 | #15 | #16[c] | #17[c] | #18[c] | #19[c] | #20 | #21[c] | #22 | #23 | #24[c] | #25[c] | #26 |
|---|---|---|---|---|---|---|---|---|---|---|---|---|---|---|---|---|---|
| PC-3 | % | 84.25 | 75.5 | 66.75 | 58 | 49.25 | 84.25 | 84.25 | 84.25 | 99.25 | 91.75 | 69.25 | 74.25 | 0 | 84.5 | 84.105 | 49.105 |
| PC-Si-1 | % | 15 | 11.25 | 7.5 | 3.75 | | 0 15 | 0 | 0 | 0 | 7.5 | 30 | 0 | 0 | 15 | 15 | 0 |
| PC-Si-2 | % | 0 | 12.5 | 25 | 37.5 | 50 | 0 | 0 | 0 | 0 | 0 | 0 | 25 | 99.25 | 0 | 0 | 50 |
| Total Siloxane in Comp.** | % | 3.0 | 3.0 | 3.0 | 3.0 | 3.0 | 3.0 | 0 | 0 | 0 | 1.5 | 6.0 | 1.5 | 6.0 | 3.0 | 3.0 | 3.0 |
| ABS | % | 0 | 0 | 0 | 0 | 0 | 0 | 15 | 0 | 0 | 0 | 0 | 0 | 0 | 0 | 0 | 0 |
| BABS | % | 0 | 0 | 0 | 0 | 0 | 0 | 0 | 15 | 0 | 0 | 0 | 0 | 0 | 0 | 0 | 0 |
| OTHERS* | % | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 | 0.50 |
| SR135 | % | 0.125 | 0.125 | 0.125 | 0.125 | 0.125 | 0 | 0.125 | 0.125 | 0.125 | 0.125 | 0.125 | 0.125 | 0.125 | 0 | 0 | 0 |
| SG3 | % | 0.125 | 0.125 | 0.125 | 0.125 | 0.125 | 0 | 0.125 | 0.125 | 0.125 | 0.125 | 0.125 | 0.125 | 0.125 | 0 | 0.07 | 0.07 |
| PB7 | % | 0 | 0 | 0 | 0 | 0 | 0.25 | 0 | 0 | 0 | 0 | 0 | 0 | 0 | 0 | 0 | 0 |
| VSR | % | 0 | 0 | 0 | 0 | 0 | 0 | 0 | 0 | 0 | 0 | 0 | 0 | 0 | 0 | 0.06 | 0.06 |
| SB97 | % | 0 | 0 | 0 | 0 | 0 | 0 | 0 | 0 | 0 | 0 | 0 | 0 | 0 | 0 | 0.06 | 0.06 |
| SY163 | % | 0 | 0 | 0 | 0 | 0 | 0 | 0 | 0 | 0 | 0 | 0 | 0 | 0 | 0 | 0.15 | 0.15 |
| SR52 | % | 0 | 0 | 0 | 0 | 0 | 0 | 0 | 0 | 0 | 0 | 0 | 0 | 0 | 0 | 0.055 | 0.055 |

*OTHERS - standard additives, including hindered phenol antioxidant (0.10 wt%), phosphite stabilizer (0.10 wt%) and pentaerythritol tetrastearate (0.3 wt%) were also added to the compositions.
**This is the total amount of siloxane in the sample, based on the total weight of the composition.
[c] - comparative example.

Table 5

| PHYS. PROP. | Unit | #11[c] | #12 | #13 | #14 | #15 | #16[c] | #17[c] | #18[c] | #19[c] | #20 | #21[c] | #22 | #23 | #24[c] | #25 | #26 |
|---|---|---|---|---|---|---|---|---|---|---|---|---|---|---|---|---|---|
| NII, 23°C | kJ/m$^2$ | 56.2 | 58.3 | 58.6 | 58.0 | 52.1 | 54.6 | 42.0 | 41.4 | 9.6 | 53.2 | 55.5 | 42.6 | 47.3 | 54.7 | 56.9 | 51.6 |
| NII, 0°C | kJ/m$^2$ | 50.4 | 52.3 | 42.1 | 50.0 | 41.8 | 48.8 | 39.1 | 23.3 | 9.6 | 21.7 | 51.5 | 15.7 | 44.3 | 50.2 | 52.0 | 40.3 |
| Vicat B/120 | °C | 142.0 | 141.4 | 140.9 | 140.8 | 140.5 | 142.1 | 135.8 | 136.9 | 142.1 | 142.3 | 141.11 | 41.1 | 138.3 | 142.3 | 141.5 | 140.6 |
| Lightness | CIE ’76 L* | 27.9 | 27.5 | 27.3 | 27.0 | 26.9 | 27.5 | 28.8 | 28.1 | 27.1 | 27.6 | 28.4 | 27.0 | 26.7 | 58.3 | 27.6 | 26.8 |
| dE flop (15° vs 110°) | dE | 8.7 | 5.5 | 3.4 | 1.6 | 1.2 | 2.4 | 11.9 | 10.3 | 1.5 | 4.5 | 11.6 | 1.4 | 1.7 | 2.7 | 6.3 | 1.8 |
| % Trans at | 800 nm | 77.2 | 82.6 | 86.1 | 88.6 | 89.6 | 0 | 53.4 | 75 | 89.8 | 83.6 | 73.3 | 90 | 89.4 | 80.6 | 79.1 | 89.8 |
| Different | 810 nm | 77.6 | 83 | 86.4 | 88.8 | 89.7 | 0 | 53.8 | 77.3 | 90 | 83.8 | 74.2 | 90 | 89.5 | 81 | 79.5 | 89.9 |
| wavelength s | 1060 nm | 84.9 | 87.9 | 89.4 | 90.2 | 90.7 | 0 | 57.9 | 77.1 | 90.7 | 88.7 | 83 | 91.4 | 90.8 | 87 | 86.5 | 91 |
| | 1070 nm | 85.2 | 88.6 | 89:4 | 90.2 | 90.7 | 0 | 58.1 | 77.3 | 90.8 | 88.8 | 83.3 | 91.4 | 90.9 | 87.1 | 86.6 | 91 |
| Average Domain Size | nm | 51 | 35 | 31 | 25 | 22 | 63 | NA | NA | NA | 54 | 52 | 18 | 20 | 53 | 53 | 22 |

NA - not applicable.
[c]- comparative example.

Table 5 shows that the addition of carbon black (which is a black pigment and not a dye, Example 16) stops dE flop, but it also reduces the transmission to 0% at 800 nm. Comparing Example 11 to Examples 12 to 15 shows that the use of only PC-Si-1 (opaque polycarbonate-polysiloxane copolymer) in the composition has good impact and heat properties, but the dE value is higher than that of Examples 12 to 15. Examples 17 and 18, which have ABS and BABS instead of polycarbonate-polysiloxane copolymer, have good impact but very low transmission at 800 nm, while Example 19 (which is almost 100% polycarbonate) has poor impact but very high transmission at 800 nm. Comparing Examples 11 to 15 shows that as the domain size of the polysiloxane decreases, the dE also decreases, but the transmission increases. The Examples also show that the use of different combinations of dyes, along with the polycarbonate-polysiloxane copolymer, to produce a composition wherein the siloxane domains in the composition have an average domain size of between 15 and 45 nanometers, can produce compositions having excellent dE flop and transmission.

## Claims

1. A thermoplastic composition comprising:

    from 0.5 wt.% to 96.99 wt.% of an aromatic polycarbonate;
    from 3 wt.% to 99.49 wt.% of a polycarbonate-polysiloxane copolymer; and
    from 0.01 wt.% to 5.0 wt.% of a dye combination comprising a dark color dye;
    wherein the siloxane domains in the composition have an average domain size of between 15 and 45 nanometers, as determined by taking three TEM pictures of each sample, measuring a longest axis of twenty domains on each TEM picture and determining the average based upon the measurements from the three TEM pictures;
    wherein a molded article having a thickness of 1.0 millimeters comprising the thermoplastic composition has a percent transmission of infrared light of greater than or equal to 65%, when measured at a wavelength of 800 nm, and
    a dE flop of less than 6, wherein dE flop is determined using CIELAB 1976 equation with measurements taken in the center of a 1 mm thick injection molded plaque formed using a mold with a film gate extending the length of one edge, using a D65 illuminant and at measurement angles of 15° and 110°.

2. The thermoplastic composition of claim 1 wherein total siloxane content, based on the total composition, is at least 1.5 wt.%.

3. The thermoplastic composition of claim 1 wherein total siloxane content, based on the total composition, is at least 2.0 wt.%.

4. The thermoplastic composition of claim 1 wherein total siloxane content, based on the total composition, is at least 2.3 wt.%.

5. The thermoplastic composition of claim 1, wherein the dE flop is less than 4.

6. The thermoplastic composition of claim 1, wherein a molded article having a thickness of 1.0 millimeters comprising the thermoplastic composition has a percent transmission of infrared light of greater than or equal to 65%, when measured at a wavelength of 1060 nm.

7. The thermoplastic composition of claim 1, wherein the dye or dye combination is black.

8. The thermoplastic composition of claim 1, wherein a molded article having a thickness of 1.0 millimeters comprising the thermoplastic composition has a percent transmission of infrared light of greater than or equal to 80%, when measured at a wavelength of 800 nm.

9. The thermoplastic composition of claim 1, further comprising a flame retardant.

10. The thermoplastic composition of claim 1, further comprising a second polycarbonate-polysiloxane copolymer.

11. An article comprising the thermoplastic composition of claim 1, wherein the article is suitable for laser welding.

12. The thermoplastic composition of claim 1, 3, 5, 8, or 10, comprising
    from 50 wt.% to 96.99 wt.% of the aromatic polycarbonate;

from 3 wt.% to 45 wt.% of the polycarbonate-polysiloxane copolymer; and
from 0.01 wt.% to 5.0 wt.% of a dye combination comprising a dark color dye;
wherein the total siloxane content, based on the total composition, is at least 1.5 wt.%.

**13.** An article comprising the thermoplastic composition of claim 1 or 12.

**14.** The thermoplastic composition of claim 1 or 5, wherein the from 3 wt.% to 99.49 wt.% of the polycarbonate-polysiloxane copolymers comprises two polycarbonate-polysiloxane copolymers, and wherein at least one polycarbonate-polysiloxane copolymer is transparent; and
wherein the total siloxane content, based on the total composition, is at least 1.5 wt.%.

**Patentansprüche**

**1.** Eine thermoplastische Zusammensetzung, die Folgendes umfasst:

von 0,5 Gewichtsprozent bis 96,99 Gewichtsprozent eines aromatischen Polycarbonats,
von 3 Gewichtsprozent bis 99,49 Gewichtsprozent eines Polycarbonat-Polysiloxan-Copolymers und
von 0,01 Gewichtsprozent bis 5,0 Gewichtsprozent einer Farbstoffkombination, die einen Farbstoff von dunkler Farbe umfasst,
worin die Siloxandomänen in der Zusammensetzung eine durchschnittliche Domänengröße von zwischen 15 und 45 Nanometern haben, bestimmt durch Aufnahme von drei TEM-Bildern jeder Probe, Messen einer längsten Achse von zwanzig Domänen auf jedem TEM-Bild und Ermittlung des Durchschnitts anhand der Messungen von den drei TEM-Bildern,
worin ein geformter Artikel mit einer Dicke von 1,0 Millimetern, der die thermoplastische Zusammensetzung umfasst, eine prozentuale Durchlässigkeit für Infrarotlicht von mehr als oder gleich 65%, gemessen bei einer Wellenlänge von 800 nm, hat, und
einen dE-Flop von weniger als 6, worin der dE-Flop ermittelt wird mit Hilfe der CIELAB 1976-Gleichung mit Messungen, die in der Mitte einer 1 mm dicken spritzgegossenen Platte unter Verwendung einer Form mit einem Schirmanguss vorgenommen werden, der die Länge einer Kante erweitert, unter Verwendung einer D65-Lichtquelle und mit Messwinkeln von 15° und 110°.

**2.** Die thermoplastische Zusammensetzung gemäß Anspruch 1, worin der Gesamt-Siloxangehalt, basierend auf der Gesamtzusammensetzung, mindestens 1,5 Gewichtsprozent beträgt.

**3.** Die thermoplastische Zusammensetzung gemäß Anspruch 1, worin der Gesamt-Siloxangehalt, basierend auf der Gesamtzusammensetzung, mindestens 2,0 Gewichtsprozent beträgt.

**4.** Die thermoplastische Zusammensetzung gemäß Anspruch 1, worin der Gesamt-Siloxangehalt, basierend auf der Gesamtzusammensetzung, mindestens 2,3 Gewichtsprozent beträgt.

**5.** Die thermoplastische Zusammensetzung gemäß Anspruch 1, worin der dE-Flop kleiner ist als 4.

**6.** Die thermoplastische Zusammensetzung gemäß Anspruch 1, worin ein geformter Artikel mit einer Dicke von 1,0 Millimetern, der die thermoplastische Zusammensetzung umfasst, eine prozentuale Durchlässigkeit für Infrarotlicht von mindestens 65% hat, gemessen bei einer Wellenlänge von 1060 nm.

**7.** Die thermoplastische Zusammensetzung gemäß Anspruch 1, worin der Farbstoff oder die Farbstoffkombination schwarz ist.

**8.** Die thermoplastische Zusammensetzung gemäß Anspruch 1, worin ein geformter Artikel mit einer Dicke von 1,0 Millimetern, der die thermoplastische Zusammensetzung umfasst, eine prozentuale Durchlässigkeit für Infrarotlicht von mindestens 80%, gemessen bei einer Wellenlänge von 800nm, hat.

**9.** Die thermoplastische Zusammensetzung gemäß Anspruch 1, die weiter ein Flammverzögerungsmittel umfasst.

**10.** Die thermoplastische Zusammensetzung gemäß Anspruch 1, die weiter ein zweites Polycarbonat-Polysiloxan-Copolymer umfasst.

11. Ein Artikel, der die thermoplastische Zusammensetzung gemäß Anspruch 1 umfasst, worin der Artikel zum Laserschweißen geeignet ist.

12. Die thermoplastische Zusammensetzung gemäß Anspruch 1, 3, 5, 8 oder 10, die Folgendes umfasst:

von 50 Gewichtsprozent bis 96,99 Gewichtsprozent des aromatischen Polycarbonats,
von 3 Gewichtsprozent bis 45 Gewichtsprozent des Polycarbonat-Polysiloxan-Copolymers und
von 0,01 Gewichtsprozent bis 5,0 Gewichtsprozent einer Farbstoffkombination, die einen Farbstoff mit dunkler Farbe umfasst,
worin der Gesamt-Siloxangehalt, basierend auf der Gesamtzusammensetzung, mindestens 1,5 Gewichtsprozent beträgt.

13. Ein Artikel, der die thermoplastische Zusammensetzung gemäß Anspruch 1 oder 12 umfasst.

14. Die thermoplastische Zusammensetzung gemäß Anspruch 1 oder 5, worin die von 3 Gewichtsprozent bis 99,49 Gewichtsprozent der Polycarbonat-Polysiloxan-Copolymere zwei Polycarbonat-Polysiloxan-Copolymere umfassen und worin mindestens ein Polycarbonat-Polysiloxan-Copolymer transparent ist, und
worin der Gesamt-Siloxangehalt, basierend auf der Gesamtzusammensetzung, mindestens 1,5 Gewichtsprozent beträgt.

**Revendications**

1. Composition thermoplastique, comprenant :

de 0,5 % en poids à 96,99 % en poids d'un polycarbonate aromatique ;
de 3 % en poids à 99,49 % en poids d'un copolymère polycarbonate-polysiloxane ; et
de 0,01 % en poids à 5,0 % en poids d'une combinaison de colorants, comprenant un colorant de couleur sombre ;
dans laquelle les domaines siloxane dans la composition ont une taille de domaine moyenne dans la fourchette comprise entre 15 et 45 nanomètres, tel que déterminé en prenant trois images, obtenues par microscopie électronique en transmission (MET), de chaque échantillon, en mesurant un axe de longueur maximale de vingt domaines sur chaque image MET et en déterminant la moyenne d'après les mesures provenant des trois images MET ;
dans laquelle un article moulé, ayant une épaisseur de 1,0 millimètre, comprenant la composition thermoplastique, présente une transmission de la lumière infrarouge, exprimée en pourcents, supérieure ou égale à 65 %, mesurée à une longueur d'onde de 800 nm, et
une transition dE inférieure à 6, dans laquelle la transition dE est déterminée en utilisant l'équation CIELAB 1976 avec des mesures effectuées au centre d'une plaque moulée par injection, de 1 mm d'épaisseur, en utilisant un moule ayant une injection en voile étendant la longueur d'un bord, en utilisant un illuminant D65 et à des angles de mesure de 15° et 110°.

2. Composition thermoplastique selon la revendication 1, dans laquelle la teneur totale en siloxane, basée sur la composition totale, est d'au moins 1,5 % en poids.

3. Composition thermoplastique selon la revendication 1, dans laquelle la teneur totale en siloxane, basée sur la composition totale, est d'au moins 2,0 % en poids.

4. Composition thermoplastique selon la revendication 1, dans laquelle la teneur totale en siloxane, basée sur la composition totale, est d'au moins 2,3 % en poids.

5. Composition thermoplastique selon la revendication 1, dans laquelle la transition dE est inférieure à 4.

6. Composition thermoplastique selon la revendication 1, dans laquelle un article moulé, ayant une épaisseur de 1,0 millimètre, comprenant la composition thermoplastique, présente une transmission de la lumière infrarouge, exprimée en pourcents, supérieure ou égale à 65 %, mesurée à une longueur d'onde de 1060 nm.

7. Composition thermoplastique selon la revendication 1, dans laquelle le colorant, ou la combinaison de colorants, est noir(e).

**8.** Composition thermoplastique selon la revendication 1, dans laquelle un article moulé, ayant une épaisseur de 1,0 millimètre, comprenant la composition thermoplastique, présente une transmission de la lumière infrarouge, exprimée en pourcents, supérieure ou égale à 80 %, mesurée à une longueur d'onde de 800 nm.

**9.** Composition thermoplastique selon la revendication 1, comprenant en outre un agent ignifuge.

**10.** Composition thermoplastique selon la revendication 1, comprenant en outre un deuxième copolymère polycarbonate-polysiloxane.

**11.** Composition thermoplastique selon la revendication 1, dans laquelle l'article convient pour le soudage laser.

**12.** Composition thermoplastique selon la revendication 1, 3, 5, 8, ou 10, comprenant :

de 50 % en poids à 96,99 % en poids du polycarbonate aromatique ;
de 3 % en poids à 45 % en poids du copolymère polycarbonate-polysiloxane ; et
de 0,01 % en poids à 5,0 % en poids d'une combinaison de colorants, comprenant un colorant de couleur sombre ;
dans laquelle la teneur totale en siloxane, basée sur la composition totale, est d'au moins 1,5 % en poids.

**13.** Article comprenant la composition thermoplastique selon la revendication 1 ou 12.

**14.** Composition thermoplastique selon la revendication 1 ou 5, dans laquelle les 3 % en poids à 99,49 % en poids des copolymères polycarbonate-polysiloxane comprennent deux copolymères polycarbonate-polysiloxane, et dans laquelle au moins un copolymère polycarbonate-polysiloxane est transparent ; et
dans laquelle la teneur totale en siloxane, basée sur la composition totale, est d'au moins 1,5 % en poids.

Figure 1

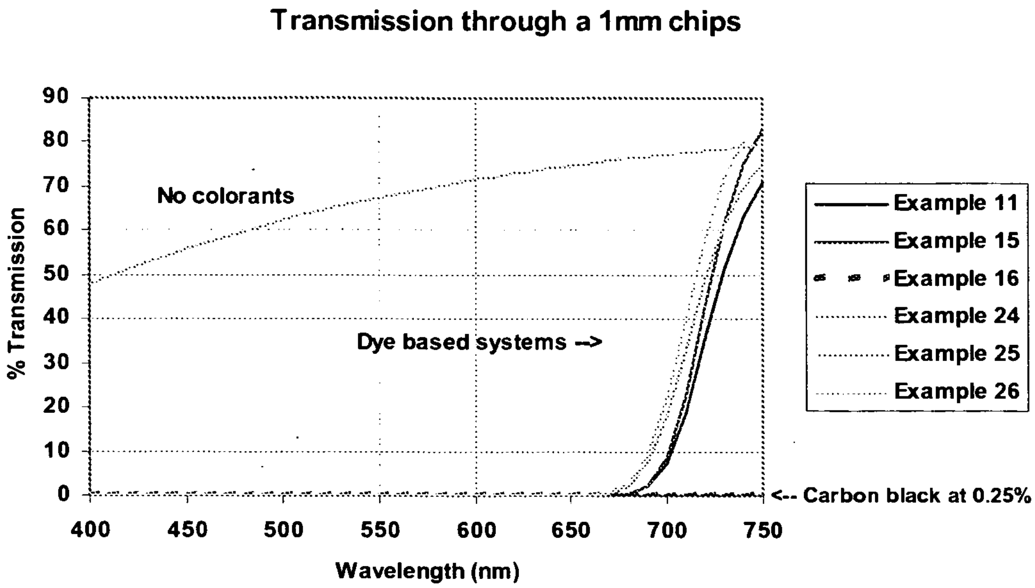
Transmission through a 1mm chips
% Transmission
Wavelength (nm)
90
80
70
60
50
40
30
20
10
0
400
450
500
550
600
650
700
750
No colorants
Dye based systems ->
<-- Carbon black at 0.25%
Example 11
Example 15
Example 16
Example 24
Example 25
Example 26

Figure 2 – TEM of Example 1

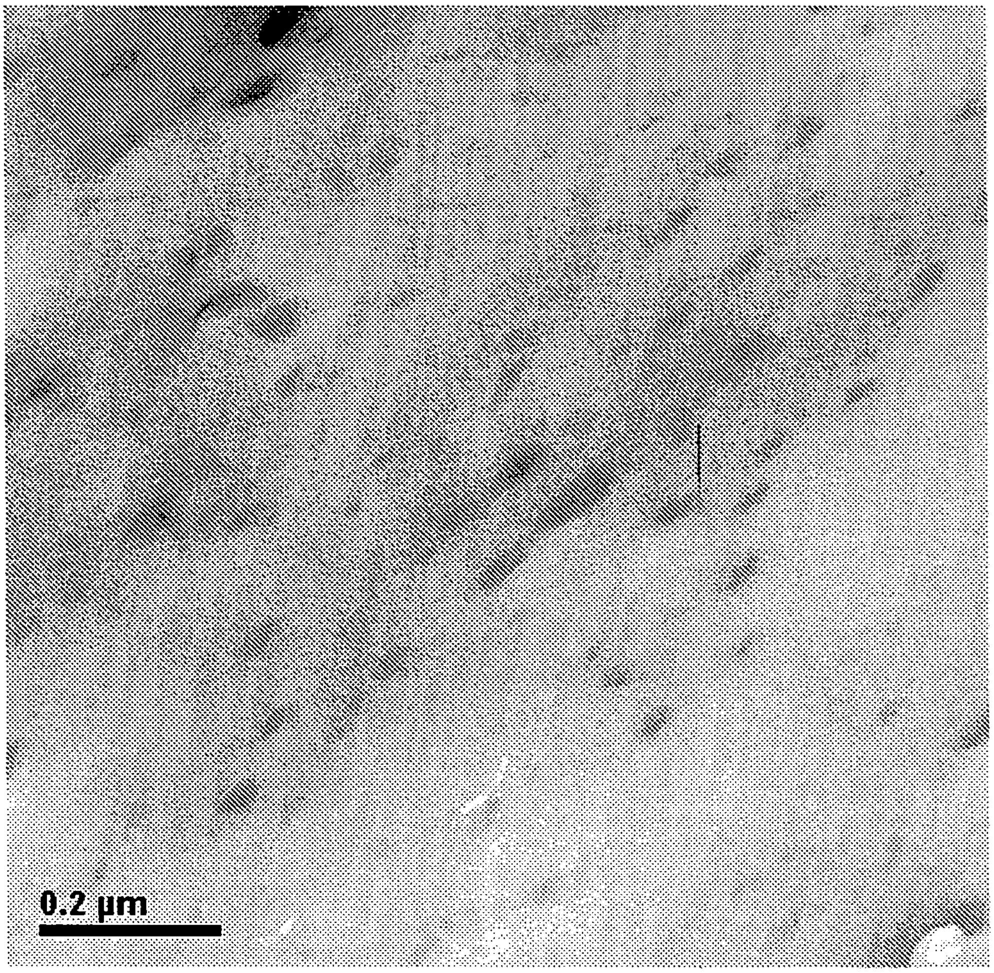

Figure 3 – TEM of Example 3

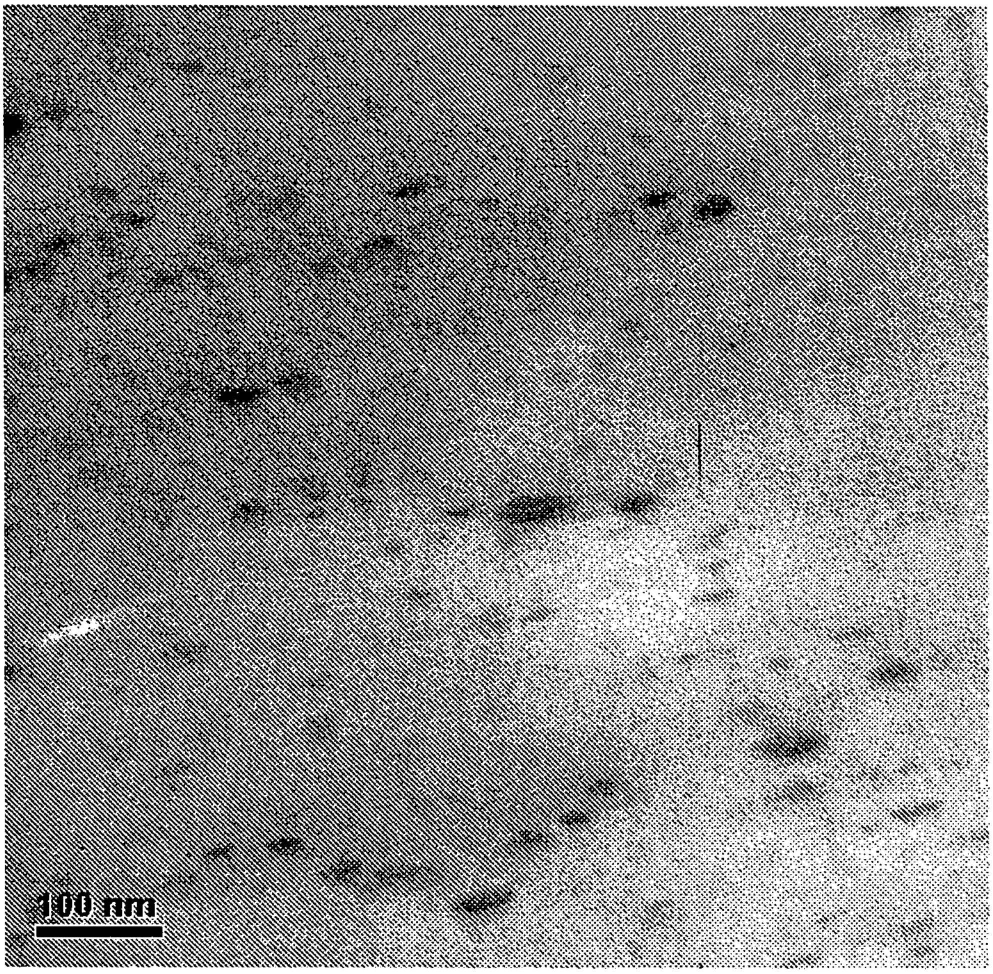

Figure 4 – TEM of Example 10

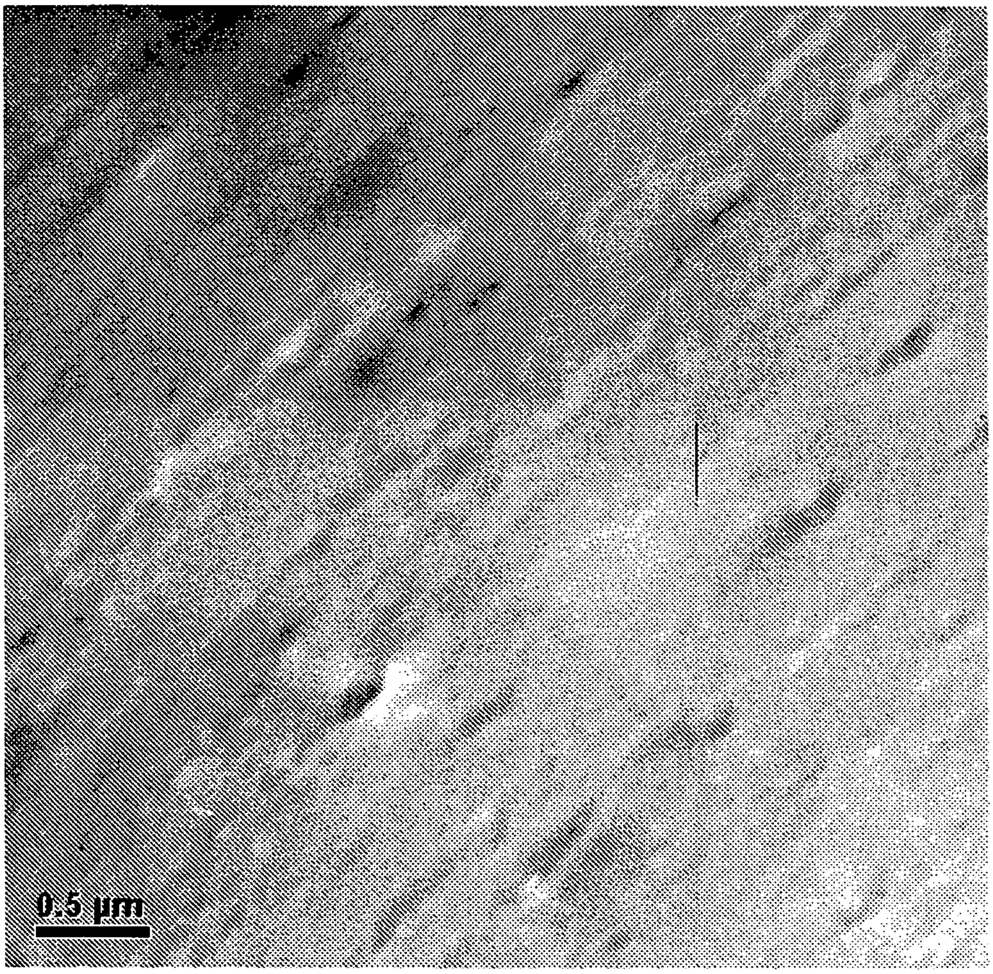

Figure 5 – TEM of Example 11

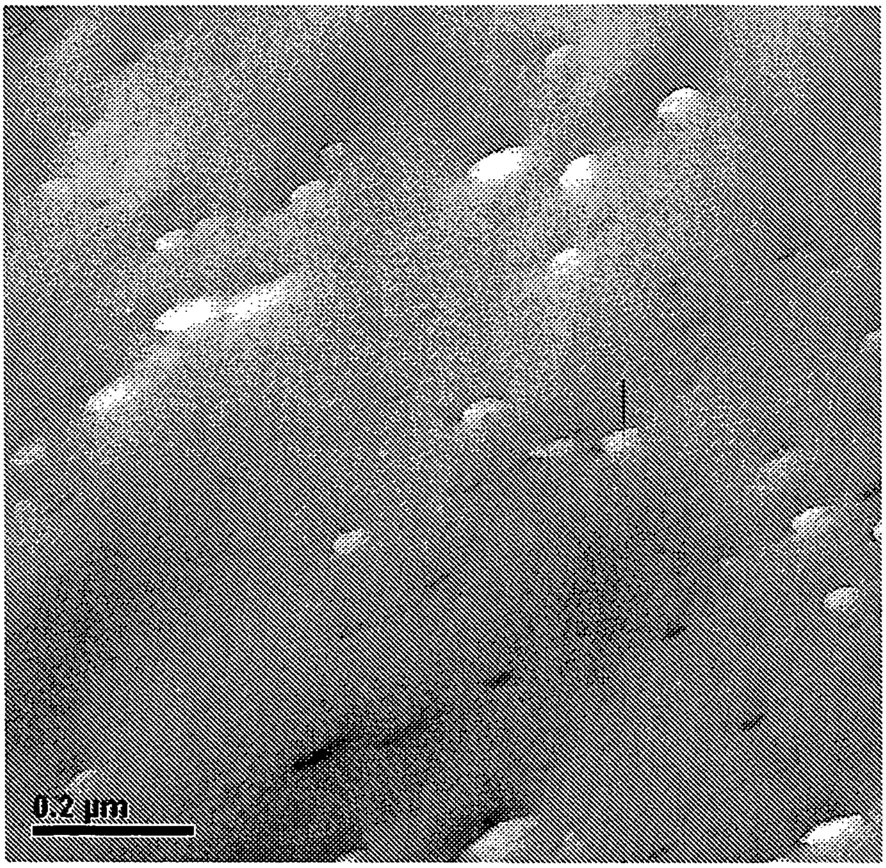

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 9003311 A
- US 20050187372 A